# EUROPÄISCHE PATENTSCHRIFT

(11) **EP 0 518 201 B1**
(45) Veröffentlichungstag und Bekanntmachung des Hinweises auf die Patenterteilung: **19.07.1995**
(21) Anmeldenummer: 92109380.3
(22) Anmeldetag: 03.06.1992
(51) Int. Cl.: B62D 29/04, B62D 49/06

(54) **Rahmenteil für ein Fahrzeug**
Frame element for a vehicle
Partie de châssis d'un véhicule

(30) Priorität: 14.06.1991 US 715933
(43) Veröffentlichungstag der Anmeldung: 16.12.1992
(73) Patentinhaber: DEERE & COMPANY, Moline, Illinois 61265 (US)
(72) Erfinder: Hutchison, Wayne Robert, Mayville, Wisconsin 53050 (US); Sebben, Daniel Angelo, West Bend, Wisconsin 53095 (US); Hayes, Eugene Gary, Beaver Dam,Wisconsin 53916 (US); Patterson, Jon Michael, Wauwatosa, Wisconsin 53226 (US); Teal, Richard Donald, Horicon, Wisconsin 53032 (US); Wasson, Steven Charles, Midland, Michigan 48640 (US); Daniel, David Robert, Midland, Michigan 48640 (US); Mirdamadi, Mansour, Midland, Michigan 48640 (US); Moore, Earl Thomas, Midland, Michigan 48640 (US); Lorenzo, Luis, Midland, Michigan 48640 (US); Cleereman, Robert John, Midland, Michigan 48640 (US); Coffey, Michael John, Stanford, Michigan 48657 (US)
(74) Vertreter: Feldmann, Bernhard

(56) Entgegenhaltungen:
- EP-A- 0 027 513
- GB-A- 1 072 807
- GB-A- 1 209 714
- US-A- 4 311 204
- PATENT ABSTRACTS OF JAPAN Band 8, Nr. 143 (M-306)(1580) 4.Juli 1984 & JP-A-59 040948 (YAMAHA) 6. März 1984

## Beschreibung

Die Erfindung bezieht sich auf ein Fahrzeug mit einem unteren Rahmenteil und einem mit diesem verbundenen Fahrzeugaufbau.

Derartige Fahrzeuge sind vorwiegend als Kleinschlepper ausgebildet, die in der Garten- und Rasenpflege einsetzbar sind (US-A-4 969 533). Der Rahmenteil dient in der Regel als Grundrahmen und ist für die Aufnahme verschiedenster Fahzeugkomponenten ausgebildet. Er besteht aus einem metallischen Werkstoff und ist aus vielen Einzelteilen zusammengesetzt, die miteinander verschraubt oder verschweißt sind. Eine solche Herstellung und auch der Zusammenbau ist naturgemäß mit hohen Kosten verbunden, zumal auch noch Anschlußelemente für die Fahrzeugkomponenten vorgesehen werden müssen. Viele Überlegungen sind deshalb angestellt worden, um eine Kostenreduzierung herbeizuführen, insbesondere durch Verwendung von Kunststoffen. Diese lassen sich leichter bei nicht tragenden Teilen, wie dem Fahrzeugaufbau einsetzen. Versuche sind allerdings bereits unternommen worden, Kunststoffe auch bei tragenden Rahmenteilen einzusetzen, dann allerdings in Verbindung mit einem metallischen Skelett, das den Kunststoff aufnahm.

Die mit der Erfindung zu lösende Aufgabe wird in einer Bauweise des Rahmenteiles und des Fahrzeugaufbaues gesehen, die unter Wahrung der erforderlichen Stabilität kostengünstig herzustellen ist und es erlaubt, daß bereits im Entstehungsprozeß auch die Anschlußelemente für die aufzunehmenden wichtigsten Fahrzeugkomponenten mitberücksichtigt sind. Diese Aufgabe ist nach der Erfindung dadurch gelöst, daß der Rahmenteil aus einem Faser verstärkten Kunststoff und der Fahrzeugaufbau aus Kunststoff bestehen und angeformte Mittel aufweisen, um an diesen einen Motor, ein Endgetriebe mit zugehörigen antreibbaren Laufrädern und eine Stütze für nicht angetriebene Laufräder mit schwenkbaren Lenkmitteln anschließen zu können. Auf diese Weise ist eine äußerst kostengünstige Kunststoff bauweise geschaffen, die bereits alle Anschlußelemente, einschließlich von Lagern oder Lagerschalen und Bohrungen ersetzende Öffnungen für die wichtigsten aufzunehmenden Fahrzeugkomponenten beinhaltet. Hierbei können den Rahmenteil verstärkende Kanäle, Rippen usw. als die die Fahrzeugkomponenten aufnehmenden Mittel mitherangezogen werden. Ein derartiger Rahmenteil läßt sich in einem Gießverfahren herstellen. Als Material bietet sich "The Dow Chemical Co. Thermoplast" an, das in den USA und anderen Ländern unter dem Namen Isoplast bekannt ist. Andere polymere Stoffe können ebenfalls eingesetzt werden. Im ganzen gesehen werden die Kosten für Herstellung und Montage erheblich reduziert.

Der Fahrzeugaufbau kann andererseits dabei aus zwei Einzelelementen, wie Halbschalen, gebildet sein, die zunächst zusammengefügt, beispielsweise verklebt werden, bevor sie mit dem Rahmenteil verbunden werden. Der Fahrzeugaufbau wird ebenfalls durch Gießen erzeugt und kann aus dem Material "The Dow Chemical Co. Thermoplastic" bestehen, das im Handel unter dem Namen Sagre bekannt ist. Es läßt eine hoch glasierte Oberfläche zu, das dem Fahrzeugaufbau ein ansprechendes Äußeres verleiht. Der Fahraufbau bietet dann auch genügend Freiraum, beispielsweise zur umhüllenden Aufnahme des Motors.

Nach der Erfindung wird ferner vorgeschlagen, daß der Motor und das Endgetriebe ein Modul bilden, das eine Befestigungsplatte aufweist, über die der Motor und das Endgetriebe mit dem Rahmenteil verbindbar sind. Das Endgetriebe stützt sich dabei auf den antreibbaren Rädern ab und das Gewicht von Motor und Endgetriebe belastet den Rahmenteil nicht nennenswert, so daß er nicht verstärkt ausgebildet werden muß, um etwaige von diesem Modul ausgehende Momente auffangen zu können.

Um zu verhindern, daß beim Anschließen des Moduls an den Rahmenteil Kräfte auftreten, die den plastischen Werkstoff des Rahmenteils beschädigen könnten, sieht ein weiterer Vorschlag nach der Erfindung vor, daß die Verbindungsmittel zum Anschließen der Befestigungsplatte an den Rahmenteil Abstandshalter aufweisen, die beim Spannen der Verbindungsmittel eine Kompression des Rahmenteiles limitieren, wobei die Befestigungsplatte mit Randbereichen des Rahmenteiles über eine Vielzahl von Schrauben und Plattenteilen verbindbar ist. Im einzelnen kann die Befestigungsplatte aus einem metallischen Werkstoff bestehen. Mit ihr wird zunächst das Endgetriebe über Schrauben verbunden, deren Schäfte nach oben durch den Rahmenteil vorstehen. Eine erste Mutter verbindet dann das Endgetriebe mit der Befestigungsplatte. Diese befindet sich dann in einer Öffnung des Rahmenteiles und hat eine Höhe, die die Stärke des Rahmenteiles nicht übersteigt. Sie wirkt somit als Abstandshalter. Der Schraubenschaft steht dann nach oben über den Rahmenteil noch vor und nimmt eine weitere Platte und darüber noch eine Mutter auf. Beim Anziehen dieser Mutter ist das Modul mit dem Rahmenteil verbunden, wobei die erste Mutter verhindert, daß der Rahmenteil beim Anziehen der zweiten Mutter zu sehr zusammengepreßt wird.

Über den Motor werden die rückwärtigen Laufräder angetrieben, weshalb nach der Erfindung ferner vorgesehen sein kann, daß der Motor eine Antriebswelle mit einer Antriebsriemenscheibe und die Befestigungsplatte eine verschwenkbare Spannrolle aufweist, die mit der Antriebsriemenscheibe über einen Riemen verbunden und in eine Stellung verschwenkbar ist, die von der Antriebsscheibe weiter ab liegt und in der der Riemen gespannt ist. Über die Spannrolle kann dann das Endgetriebe entkuppelt werden, wobei die Antriebsverbindung zwischen Motor und Endgetriebe Bestandteil des Moduls und nicht des Rahmenteiles ist.

Der Rahmenteil kann mindestens einen sich nach unten hin erstreckenden Kanalteil aufweisen, in dem eine Lenkeinheit mit zwei lenkbaren Laufrädern aufgenommen ist. Auf diese Weise wird ein den Rahmenteil verstärkender Kanal für den Anschluß der Lenkung in einfacher Art ausgenutzt. Der Kanalteil nimmt hierzu eine quer verlaufende als Vorderachse dienende Stange auf, an der die schwenkbaren Lenkmittel angeordnet sind. Die Lenkmittel bilden das Gestänge, die Lager und Zapfen, über die die vorderen Laufräder eingeschlagen werden. Die Lenkmittel greifen an einer Zahnstangenlenkeinrichtung bzw. an einer Platte mit einer Zahnstange an, die an dem Rahmenteil verstellbar angeordnet und über eine Lenkwelle betätigbar ist, die ihrerseits in einer nach oben weisenden mit dem Rahmenteil verbundenen Lenksäule angeordnet ist. Zum Verstellen ist die Lenkwelle an ihrem unteren Ende mit einem Ritzel, das mit der Zahnstangenlenkeinrichtung in Wirkverbindung steht, und an ihrem oberen Ende mit einem Lenkrad verbunden.

Zweckmäßig ist die quer verlaufende Stange über eine Bolzenverbindung in dem Kanalteil angeschlossen.

Unterhalb des Rahmenteiles kann noch ein Mähwerksgehäuse über ein vorderes und ein rückwärtiges Paar von Hubstangen aufgehängt sein, die mit ihren unteren Enden an dem Mähwerksgehäuse angelenkt sind, wobei die oberen Enden des rückwärtigen Paares von Hubstangen an dem Rahmenteil und die oberen Enden der vorderen Paare von Hubstangen an der quer verlaufenden Stange schwenkbar aufgehängt sind.

Hinzu kommt, daß die Verbindungsmittel zwischen der quer verlaufenden Stange und dem vorderen Paar von Hubstangen mit Bezug auf die quer verlaufende Stange eine begrenzte Schwenkbewegung in Querrichtung zulassen. Damit kann sich das Mähwerk den Schwenkbewegungen der Vorderachse anpassen.

Kupplungs- und Bremsmittel weisen ein Kupplungs- und ein Bremspedal auf, die schwenkbar an dem Fahrzeugaufbau angeordnet sind, wobei die Pedale schwenkbar im Inneren der Lenksäule, die Bestandteil des Fahrzeugaufbaues ist, angeordnet sind und je eine Tretfläche aufweisen, die sich aus der Lenksäule nach außen erstrecken. Die Lenksäule kann dann entsprechende seitliche Öffnungen aufweisen, durch die die Pedale einsetzbar sind. Auch weisen die Kupplungs- und Bremsmittel Gestänge auf, die in Führungskanälen, die von und zwischen dem Rahmenteil und dem Fahrzeugaufbau gebildet sind, angeordnet und mit dem Endgetriebe und mit Bremsen für die antreibbaren Laufräder verbunden sind. Die Führungskanäle tragen dazu bei, daß die Gestänge beispielsweise von rückwärts eingeschoben und sicher zu den frontseitig vorgesehenen Pedalen geführt werden können. Zweckmäßig sind hierzu die Führungskanäle durch am Rahmenteil und an dem Fahrzeugaufbau angeformte U-förmige Schlitze gebildet, die gegeneinander anliegen. Dadurch, daß jedes Gestänge an seinem frontseitigen Ende abgerundet ist und mit diesen Enden in konkave Ausbuchtungen gedrückt wird, die in den Pedalen vorgesehen sind, werden gesonderte Verschraubungen vermieden. Die Gestänge werden einfach nach vorne, beispielsweise durch an ihnen angreifende Federn, gegen die Pedale gedrückt.

Das Fahrzeug kann auch in einer Parkstellung festgestellt werden, wenn das Gestänge für die Bremse mit einem Bedienungshebel operativ verbunden ist, der schwenkbar an dem Rahmenteil angeordnet und in eine Stellung verschwenkbar ist, in der das Gestänge für die Bremse in einer Stellung festgestellt ist, in der die Bremse angezogen ist. Hierzu kann der Bedienungshebel einen ersten Schenkel aufweisen, der mit dem Rahmenteil derart schwenkbar verbunden ist, daß er in und quer zur Fahrzeuglängsrichtung verstellbar ist. Ferner kann der Bedienungshebel einen zweiten Schenkel aufweisen, der für eine wechselseitige Bewegung in einem Kanal des Rahmenteiles angeordnet ist. Ein solcher Kanal kann für die Führung des Bedienungshebels nur zum Feststellen ausgenutzt werden.

Auch kann der Fahrzeugaufbau Vorrichtungen zur Aufnahme eines Getriebeschalthebels aufweisen, der in Fahrzeuglängsrichtung verstellbar und mit dem Endgetriebe verbunden ist. Der Bedienungshebel und der Getriebeschalthebel können zu einem einzigen Hebel zusammengefaßt werden, bei dessen Bewegung in Fahrzeuglängsrichtung zum Beispiel eine Schaltstellung des Endgetriebes veränderbar ist und bei dessen Schwenkbewegung in Fahrzeugquerrichtung die Bremse festgestellt wird.

Beim Gießen des Fahrzeugaufbaues bietet es sich an, daß dieser direkt in der endgültigen Farbgebung aus Kunststoff gießbar ist.

Auch kann der Rahmenteil mit einer sich nach rückwärts erstrekkenden Anhängevorrichtung ausgerüstet sein. Der Rahmenaufbau ist als Bestandteil eines Fahrzeuges für die Rasen- und Gartenpflege denkbar und kann über eine Hubvorrichtung ein Mähwerksgehäuse höhenverstellbar aufnehmen. Diese ist mit einer mit dem Rahmenteil vertikal schwenkbar verbundenen und von Hand betätigbaren Höheneinstellvorrichtung versehen, die in verschiedenen Höhenstellungen festlegbar und über zwei Hubstangen mit dem Mähwerksgehäuse verbunden ist.

Schließlich kann der Rahmenteil und der Fahrzeugaufbau noch mit einer Aufnahmevorrichtung für einen in Fahrzeuglängsrichtung verstellbaren Fahrersitz versehen sein, die eine erste Fläche mit einer horizontalen Komponente, über die das Gewicht des Fahrers und des Sitzes auf den Rahmenteil und auf den Fahrzeugaufbau übertragbar sind, und eine zweite sich seitlich erstrekkende Fläche aufweist, gegen die der Sitz anliegt, um zu verhindern, daß der Sitz unter dem Gewicht des Fahrers sich nach außen verschiebt. Die besonderen Sitzführungen ihrerseits wiederum tragen zur Versteifung des Fahrzeugaufbaues bei.

Vorteilhaft ist dann der Fahrzeugaufbau mit zwei Reihen hintereinanderliegender Rasterstellen versehen, in die der Sitz wahlweise einrastbar ist.

In der Zeichnung ist ein nachfolgend näher erläutertes Ausführungsbeispiel der Erfindung dargestellt. Es zeigt:
- Fig. 1: ein aus Kunststoff hergestelltes Fahrzeug für die Rasen- und Gartenpflege in perspektivischer Darstellung von vorne rechts,
- Fig. 2: das Fahrzeug nach Fig. 1 in perspektivischer Darstellung von rückwärts,
- Fig. 3: eine perspektivische Darstellung des Fahrzeugaufbaues,
- Fig. 4: eine perspektivische Darstellung des Rahmenteiles oder des Grundrahmens des Fahrzeuges,
- Fig. 5: einen Motor, ein Endgetriebe und ein Mähwerksgehäuse zum Anschluß an den Grundrahmen in auseinandergezogener Darstellung,
- Fig. 6: eine ähnliche Darstellung wie in Fig. 5, jedoch die dort gezeigten Komponenten im eingebauten Zustand wiedergebend,
- Fig. 7: eine Befestigungsplatte, über die das Endgetriebe und der dort nicht gezeigte Motor mit dem Grundrahmen verbindbar sind in auseinandergezogener Darstellung,
- Fig. 8: die in Fig. 7 angedeutete Befestigung der Befestigungsplatte mit dem Grundrahmen in vergrößerter Darstellung,
- Fig. 9: einen Ausschnitt aus dem Grundrahmen mit Endgetriebe und Mähwerksgehäuse in der Sicht von oben,
- Fig. 10: einen Ausschnitt aus dem vorderen Bereich des Grundrahmens mit montierten Lenkgestänge,
- Fig. 11: eine Zahnstangenlenkung für die vorderen Laufräder des Fahrzeuges,
- Fig. 12: die Zahnstangenlenkung nach Fig. 11 in der Vorderansicht,
- Fig. 13: die Anordnung einer Lenkwelle im Grundrahmen und in dem Fahrzeugaufbau,
- Fig. 14: eine schematische Darstellung der Gestänge für die Kupplung und für die Bremse,
- Fig. 15: die Anlage eines Gestänges nach Fig. 14 gegen ein Pedal,
- Fig. 16: das Bremsgestänge mit zugehörigem Pedal in vergrößerter Darstellung,
- Fig. 17: einen auf das Bremsgestänge einwirkenden Getriebeschalthebel,
- Fig. 18: den Getriebschalthebel in einer Schaltstellung, in der die Bremse betätigt werden kann,
- Fig. 19: den Getriebeschalthebel in seiner Neutralstellung, in der die Bremse betätigt werden kann,
- Fig. 20: eine Höheneinstellvorrichtung für das Mähwerksgehäuse,
- Fig. 21: eine Aufnahmevorrichtung für den Sitz am Grundrahmen und dem Fahrzeugaufbau und
- Fig. 22: eine Feststellvorrichtung für den Sitz.

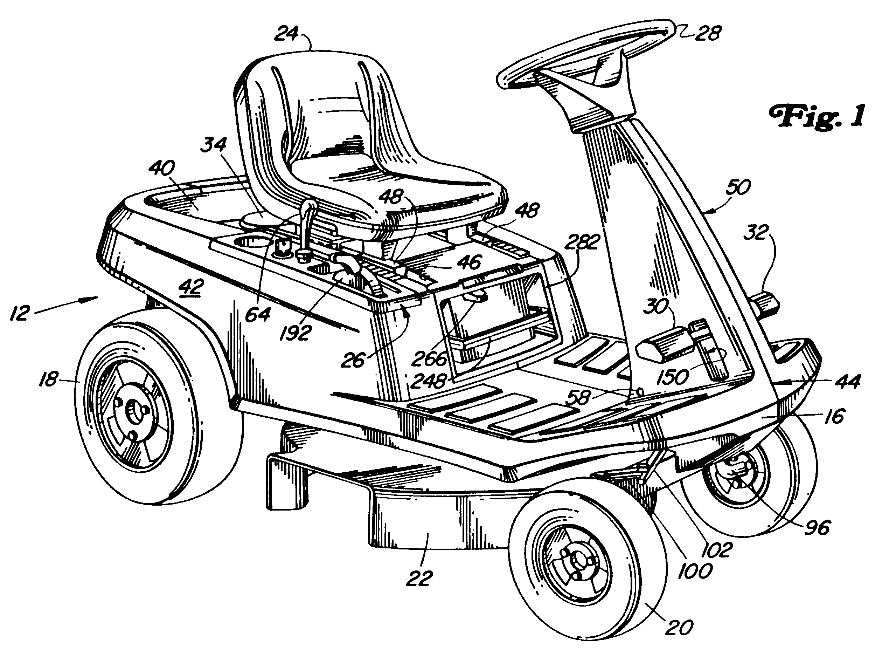

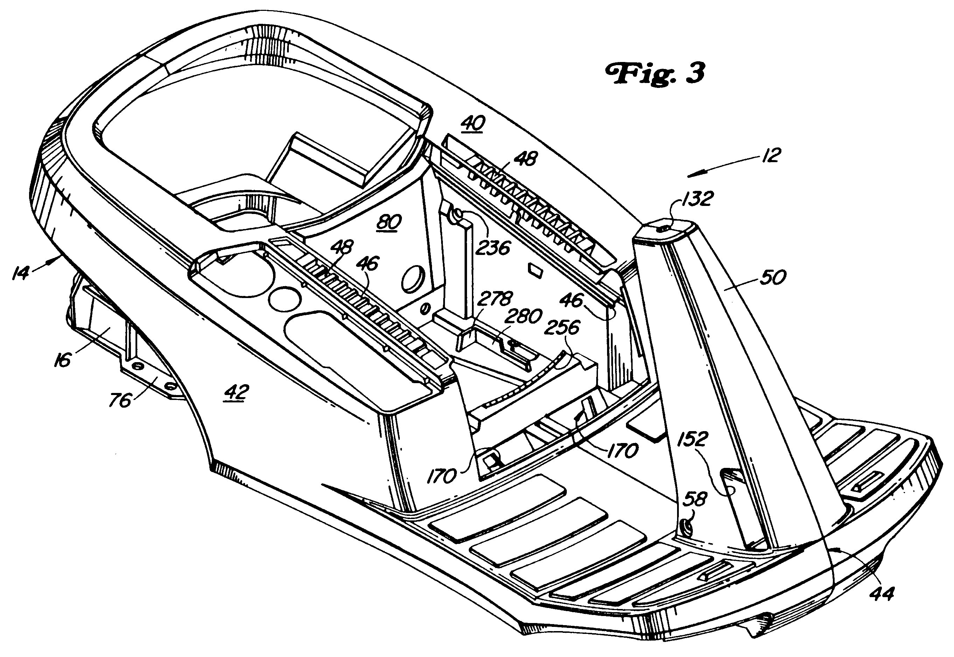

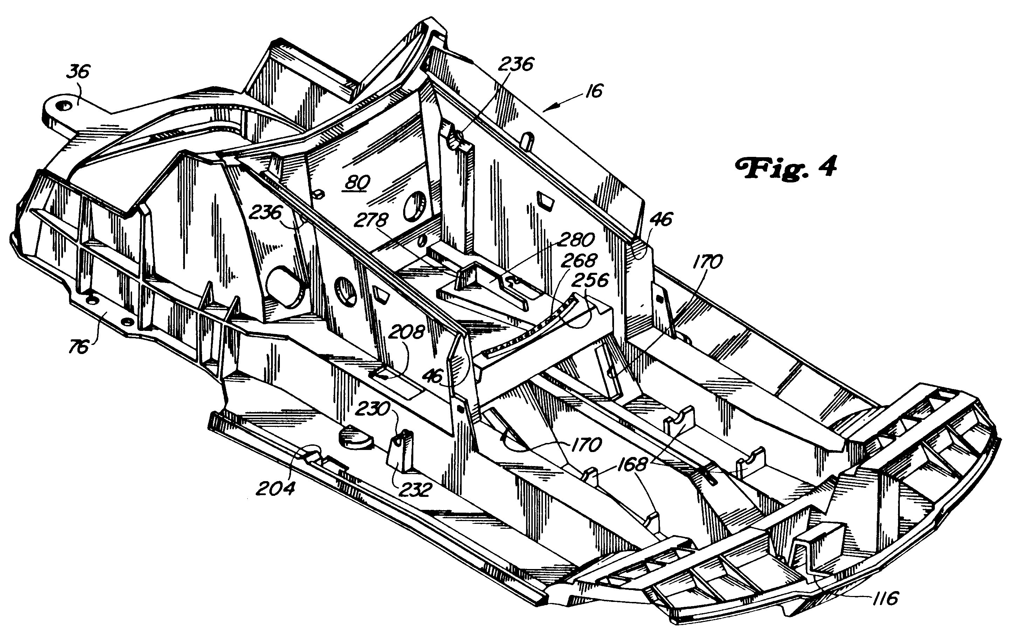

In Fig. 1 der Zeichnung ist ein Fahrzeug 10 für die Grundstückspflege in perspektivischer Darstellung wiedergegeben, dessen Rahmenaufbau 12 aus Kunststoff besteht. Des weiteren wurde eine Schalenbauweise gewählt, wobei Fig. 3 die Oberschale 14 des Rahmenaufbaues 12 zeigt und Fig. 4 die Unterschale oder einen unteren Plastikrahmen oder Grundrahmen 16, der Fiber oder Faser verstärkt und mit der ebenfalls aus Plastik bestehen Oberschale 14 verbunden, beispielsweise verklebt ist. Der Rahmenaufbau 12 wird von rückwärtigen und frontseitigen Laufrädern 18 und 20 getragen. Die frontseitigen Laufräder 20 sind lenkbar. Das Fahrzeug 10 ist ferner mit einem Mähwerksgehäuse 22, einem Fahrersitz 24, einem Schaltmodul 26, einem Steuerrad 26 und mit Pedalen 30 und 32 für die Betätigung der Bremsen bzw. für die Kupplung ausgerüstet.

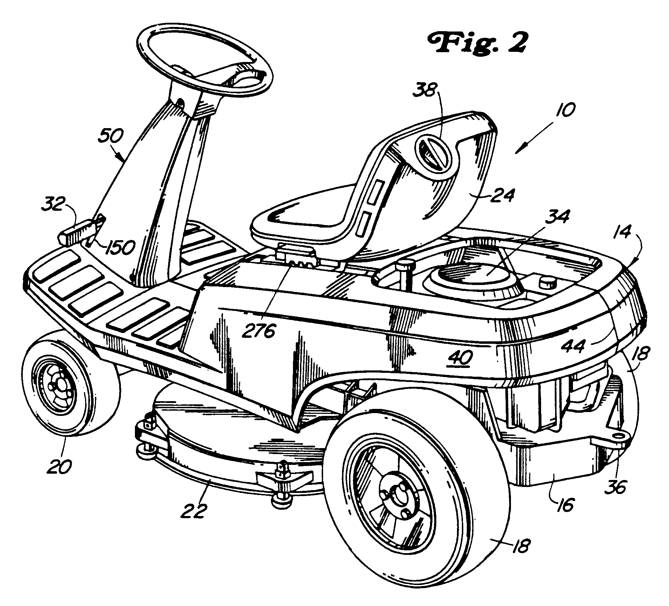

Während Fig.1 das Fahrzeug in einer Sicht von der rechten Seite und von vorne zeigt, gibt Fig. 2 das Fahrzeug 10 in einer perspektivischen Sicht von der linken Seite und von rückwärts wieder. Aus Fig. 2 ist zu erkennen, daß ein Verbrennungsmotor oder eine andere Antriebsquelle 34 auf dem unteren Rahmen 16 aufsitzt, und zwar in einem hierfür vorgesehenen nach oben hin offenen abgeteiltem rückwärtigen Raum und von einem entsprechenden Raum in der Oberschale 14 seitlich umgeben ist. Eine Anhängeöse 32 ist noch am rückwärtigen Ende des unteren Rahmens hinter dem Raum für den Motor vorgesehen. Der Sitz 24 kann so ausgebildet sein, daß er einen Brennstofftank 38 aufnimmt, dessen Einfüllstutzen an der linken Oberseite der Sitzrückenlehne angeordnet ist, und zwar an einer Stelle, die den Auspuffrohren und dem Schalldämpfer abgelegen ist.

Fig. 3 zeigt die Oberschale 14 des Rahmenaufbaues 12. Die Oberschale 14 besteht aus zwei Kunststoffschalen 40 und 42, die an einer Längsmittellinie 44 miteinander verbunden, beispielweise verklebt sind, wobei diese Verbindung zweckmäßig hergestellt wird, bevor die Oberschale 14 mit dem unteren Rahmen 16 verbunden wird. Fig. 4 läßt ferner erkennen, daß die Oberschale 14 einen mittigen zu drei Seiten abgeteilten Raum aufweist, der nach vorne zu offen ist und zur Aufnahme einer Batterie und einer Stellvorrichtung für das Mähwerksgehäuse 22 dient. An den beiden Längsseiten dieses Raumes sind noch Kanäle 46 eingegossen, in denen der Sitz 24 verstellbar ist. Hierzu sind in den beiden Kanälen 46 eine Vielzahl von Rastkerben 48 vorgesehen, in die ein Sitzgestell für den Sitz 24 wahlweise einrasten kann, um den Sitz 24 näher zu oder weiter fort von einer Lenksäule 50 positionieren zu können. Auf diese Einzelheiten wird nachfolgend noch näher eingegangen.

Der aus Kunststoff bestehende Rahmenaufbau 12 in Schalenbauweise ersetzt den herkömmlichen für Fahrzeuge in der Grundstückspflege verwendeten Rahmen. Der Rahmenaufbau 12 nimmt alle Komponenten des Fahrzeuges auf oder trägt diese.

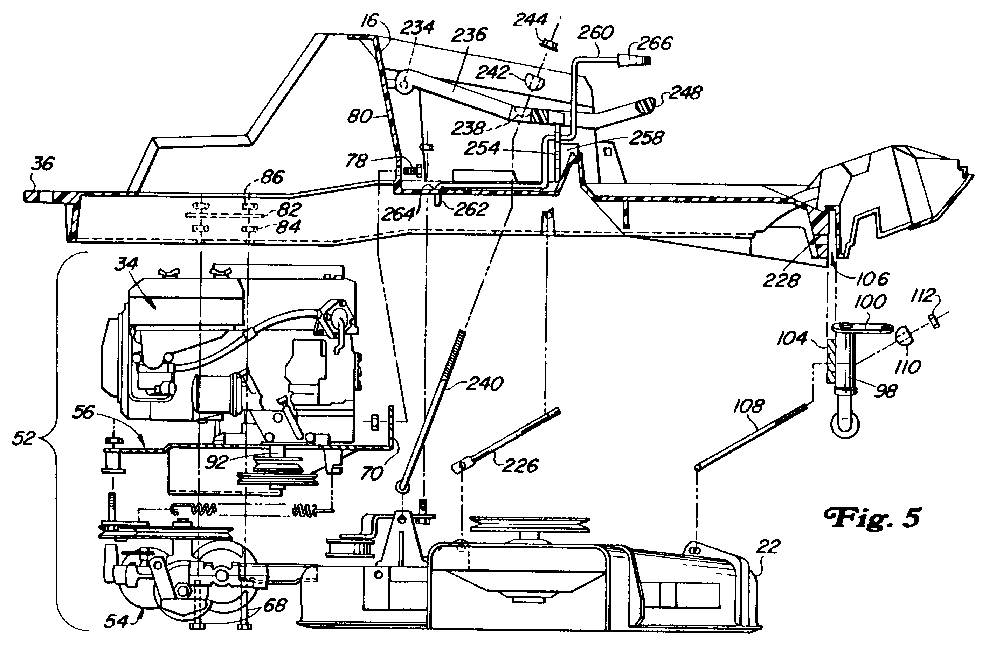

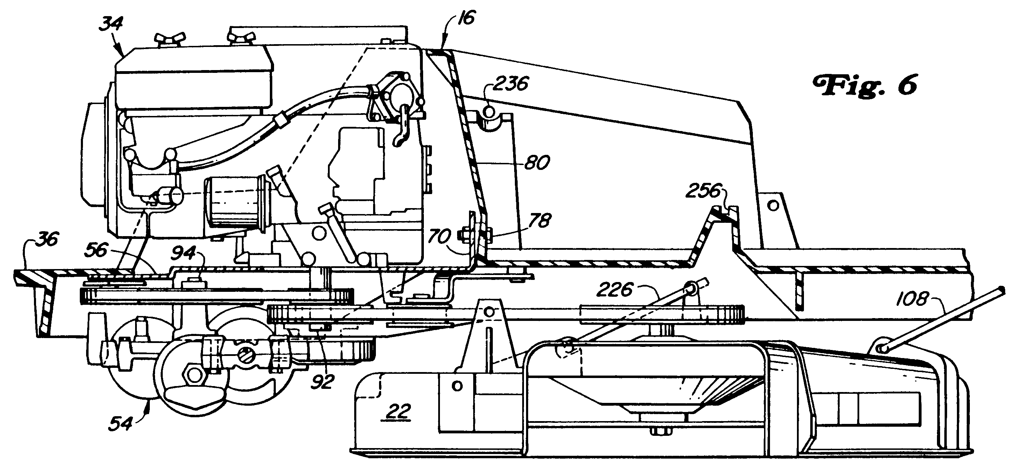

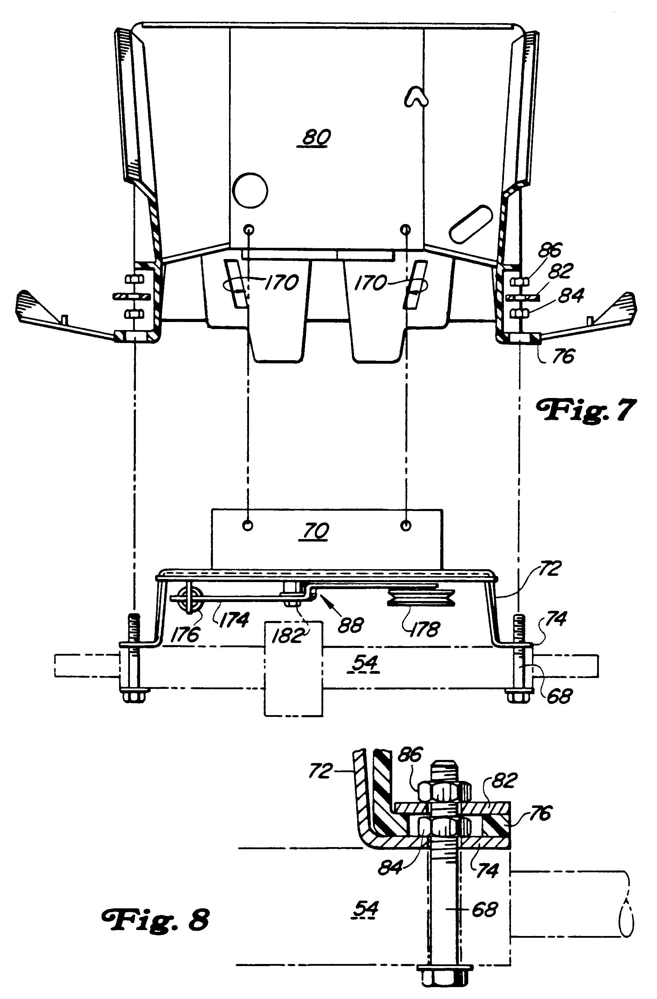

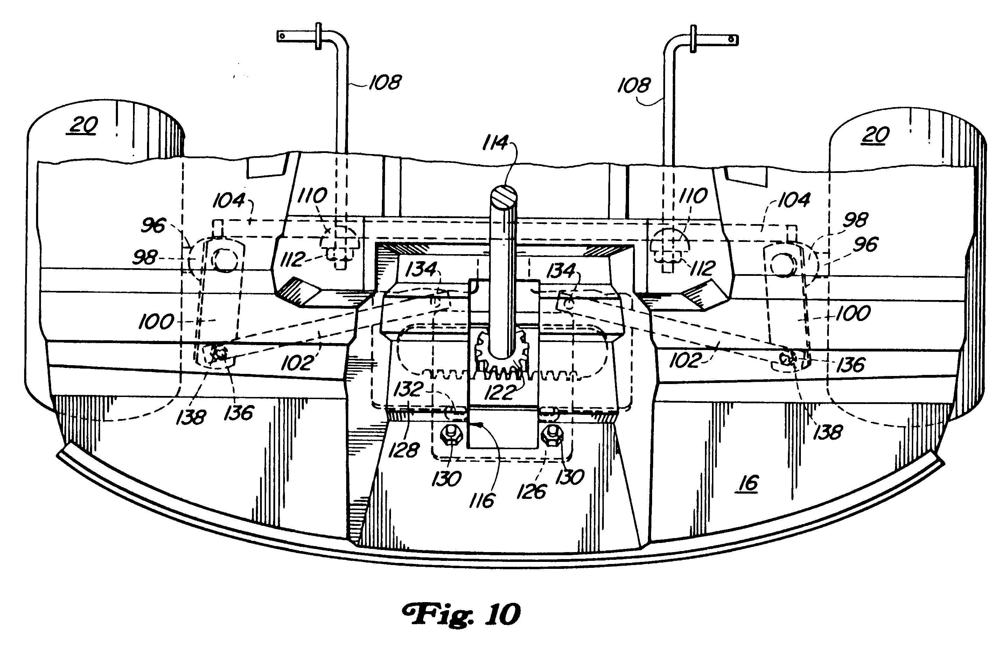

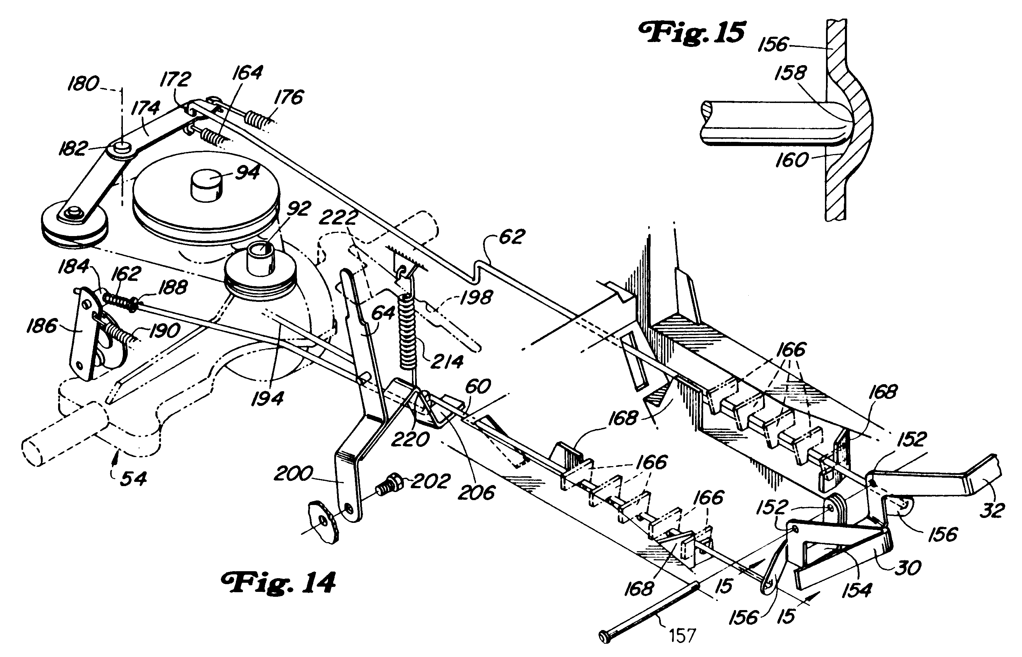

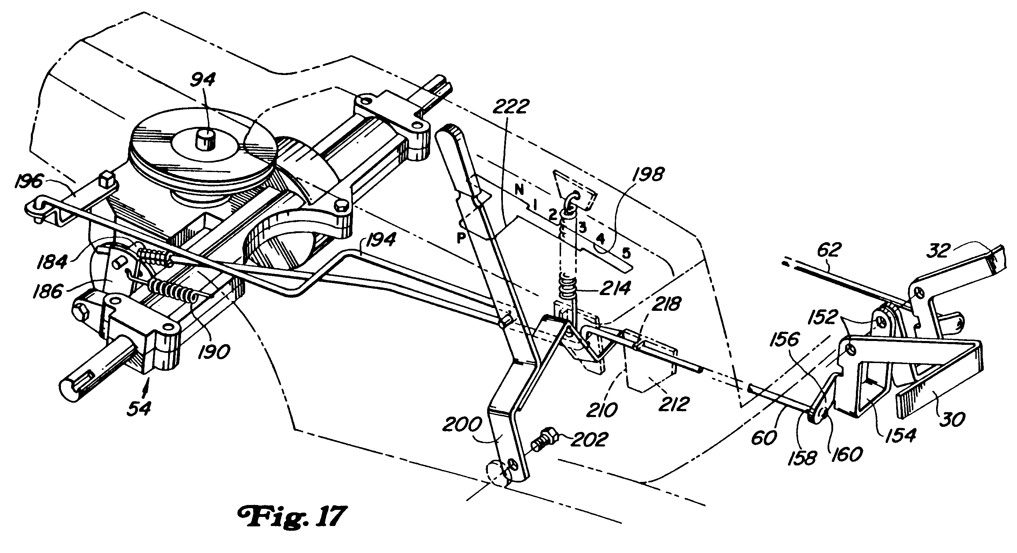

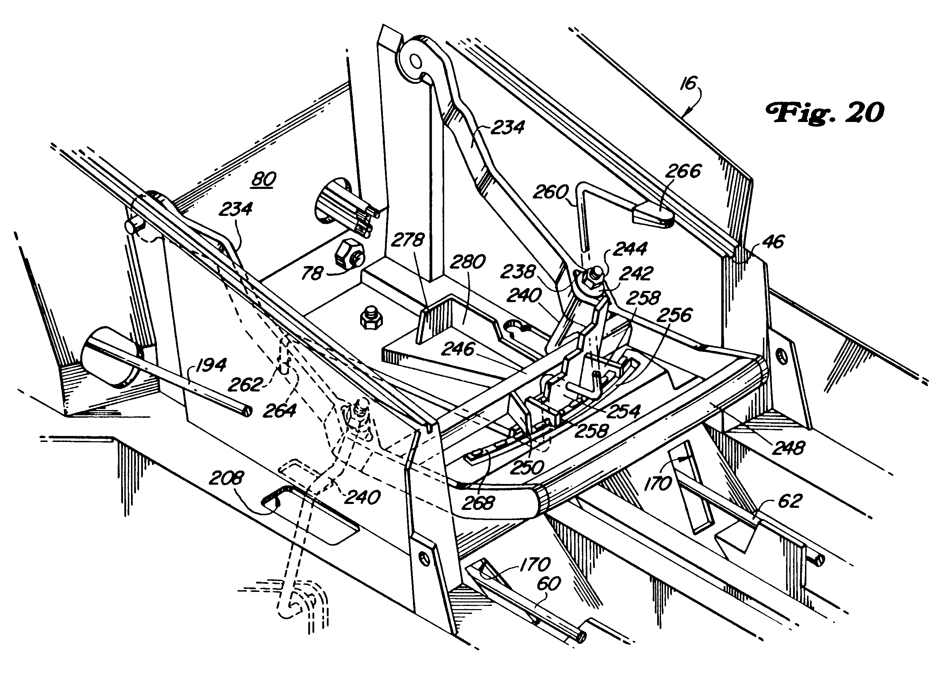

Im einzelnen ist dies ein Motor-Endgetriebe Modul 52, das in auseinandergezogener Darstellung in Fig. 5 und im zusammengebauten Zustand in Fig. 6 wiedergegeben ist. Das Modul 52 besteht aus dem Verbrennungsmotor 34, und dem Endgetriebe 54, die mit einer Tragplatte 56 verbunden sind, wie es beispielweise aus der Fig. 7 hervorgeht. Auch die Räder, deren Radaufhängungen und die Fahrzeuglenkung sind an dem Rahmenaufbau 12 angeordnet. Hierzu wird auf die Fig. 10 bis 13 im einzelnen verwiesen. Ferner sind die Gelenkachsen 58 mit den zugehörigen Steuergestängen 60 und 62 für die Bremsen und für die Kupplung in den Rahmenaufbau 12 integriert. Die Steuergestänge 60 und 62 sind am besten aus den Fig. 14 bis 16 erkennbar. Auch ein Hebel 64 für die Schaltung des Getriebes, der gleichzeitig als die Bremsen feststellender Hebel dient, ist an den Rahmenaufbau montierbar, wie es aus den Fig. 17 bis 19 hervorgeht. Das Mähwerksgehäuse 22 mit zugehörigem Antrieb und Schneidmessern ist, wie die Fig. 1 und 2 ausweisen, zwischen den Radachsen montiert. Gestänge 66 und 68 zum Aufhängen und Einstellen der Mähwerksgehäusehöhe gehen aus den Fig. 5 und 20 hervor. Die Sitzbefestigung und seine Verstellung wird mit Bezug auf die Fig. 3, 4, 21 und 22 erläutert.

### Montage des Motors und des Endgetriebes

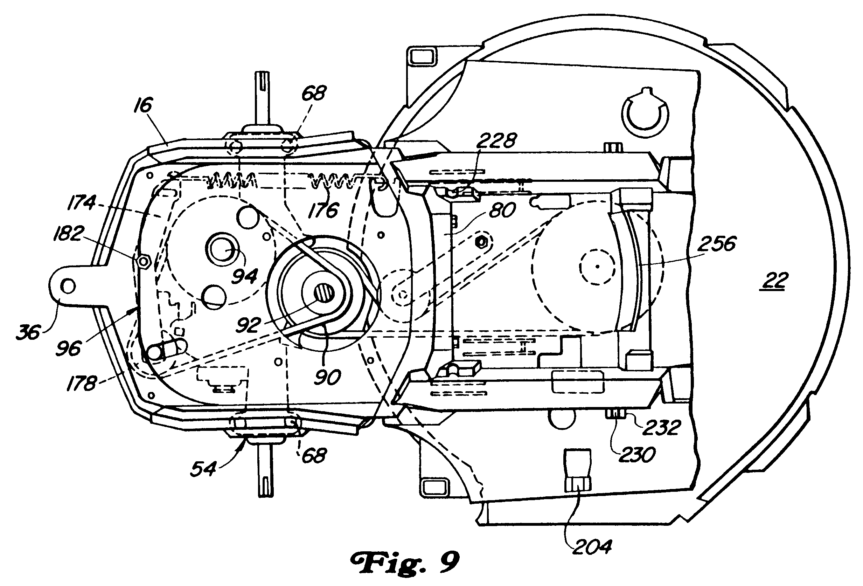

Eine als Modul 52 ausgebildete Antriebsvorrichtung ist in Fig. 5 in auseinandergezogener Darstellung wiedergegeben. Sie dient zum Antrieb der rückwärtigen Laufräder 18. Die Kraftquelle oder der Verbrennungsmotor 34 ist am rückwärtigen Ende des Fahrzeuges 10 angeordnet. Der Motor 34 ist über einen Riementrieb mit dem Endgetriebe 54 verbunden, so daß dieses von dem Motor aus angetrieben werden kann. Das Endgetriebe 54 selbst weist Zahnräder und / oder einen hydrostatischen Antrieb, ein Differential und eine Antriebsachse (Fig. 9) auf, um die Leistung des Motors 34 auf die antreibbaren Laufräder 18 übertragen zu können.

Eine in den Fig. 7 und 8 dargestellte Befestigungseinrichtung dient zum Anschluß des Moduls 52 an den aus Kunststoff bestehenden Grundrahmen 16. Sie wird durch einen im wesentlichen horizontal sich erstreckenden plattenähnlichen Teil geprägt, der in der nachfolgenden Beschreibung als Befestigungsplatte 56 bezeichnet ist. Die Befestigungsplatte 56 dient zum Anschluß des Motors 34, des Endgetriebes 54 und des Riemengetriebes an den Grundrahmen 16. Sie weist an ihren Seiten je einen ersten L-förmigen, nach unten zeigenden Winkelteil 72 mit einem nach außen abgebogenen horizontalen Flansch 74 und an ihrer Frontseite einen nach oben zeigenden Winkelteil 70 auf. Diese Winkelteile steifen die Befestigungsplatte aus und verstärken sie. Sie dienen außerdem zum Anschluß der Befestigungsplatte 56 an den Grundrahmen 16, wozu erste und zweite Anschlußmittel vorgesehen sind. Das erste Anschlußmittel besteht aus zwei Paar Schrauben 68, die im Bereich der beiden seitlichen Antriebsachsen die Befestigungsplatte 56 vermittels ihrer Flansche 74 mit außen und seitlich liegenden Bereichen oder Flanschen 76 des Grundrahmens 16 verbinden sollen, wie es im einzelnen aus Fig. 7 zu ersehen ist. Über das zweite Anschlußmittel in Form von zwei nebeneinander angeordneten und sich in Längsrichtung erstreckenden Schrauben 78 wird der nach oben weisende Winkelteil 70 der Befestigungsplatte 56 mit einer rückwärtigen Wand 80 eines abgeteilten Raumes für den Sitz am Grundrahmen 16 im Bereich dessen Längsmittelebene verbunden, was aus Fig. 6 erkennbar ist. Befestigungslöcher im horizontalen Bereich der Befestigungsplatte 56 sind für den Schraubanschluß des Motors 34 vorgesehen (Fig. 9), so daß der Motor oben auf der Befestigungsplatte aufsitzen kann. Das Endgetriebe 54 wird von unten mit der Befestigungsplatte verschraubt, wozu ebenfalls die Schrauben 68 des ersten Anschlußmittels dienen. Dies ist in Fig. 8 im einzelnen dargestellt, auf die noch näher einzugehen ist.

In Fig. 3 ist der Verbrennungsmotor nicht eingezeichnet, doch ist ein nach oben und unten offener abgeteilter Raum erkennbar, der zur Aufnahme der Befestigungsplatte mit Endgetriebegehäuse 54 und Motor 34 dient. Im montierten Zustand ist dann der Raum nach unten verschlossen nach oben hin jedoch noch offen.

Das Modul 52 hat ein beträchtliches Gewicht, und das Modul 52 soll derart mit den Flanschen 76 des Fiber verstärkten und aus Kunststoff, wie Plastik, hergestellten Grundrahmens 16 verbunden werden, daß ein Kriechen des Materials oder ein zu starkes Quetschen an den Verbindungsstellen vermieden wird. Hierzu dienen die in den Fig. 7 und 8 wiedergegebenen Befestigungsmittel. Durch diese Befestigungsart werden die aus Kunststoff bestehenden Flansche 76 des Grundrahmens 16 zwischen den Flanschen 74 der Befestigungsplatte 56 und einem weiteren Metallteil 82 eingeklemmt, wobei eine Mutter 84 als Abstandshalter vorgesehen ist, um die Pressung der Flansche 76 zu begrenzen. Aus Fig. 8 ist zu entnehmen, daß die Schrauben 68, die das an den Grundrahmen 16 angeschlossene Modul 52 tragen, von unten durch die Flansche 74 der Befestigungsplatte 56, die Flansche 76 des Grundrahmens und durch den plattenförmigen Metallteil 82 gesteckt sind, wobei die als Abstandshalter ausgebildeten Muttern 84 außerdem dazu dienen, das Endgetriebe 54 mit der Befestigungsplatte 56 zu verbinden. Zweite oder obere Muttern 86 befestigen schließlich das Modul 52 mit dem Grundrahmen 16.

Der Riementrieb weist unter anderem eine Riemenspanneinrichtung 88 (Fig. 7) mit einem Riemen 90 auf, um von einer Motorantriebswelle 92 aus die Leistung auf das Endgetriebe 54 zu übertragen, die hierzu mit einer Eingangswelle 94 versehen ist (Fig. 7, 9 und 14).

Der Verbrennungsmotor ist derart mit der Befestigungsplatte zu verbinden bzw. zu verschrauben, daß sich im eingebauten Zustand der Schwerpunkt des Motors über oder zumindest im Bereich einer durch die Antriebsachsen gehenden und gedachten Längsachse befindet. Diese vertikale Ausrichtung vom Schwerpunkt des Motors zu den Antriebsachsen führt dazu, daß das Gewicht des Motors direkt auf den Boden über die Befestigungsplatte, das Endgetriebe, die Antriebsachsen und die rückwärtigen Laufräder übertragen wird, ohne daß der Grundrahmen Biegemomente aufnehmen müßte. Dies wäre der Fall, wenn der Schwerpunkt des Motors horizontal versetzt wäre, wobei dann der Motor die Tendenz hätte, um die Längsachse der Antriebsachsen zu verschwenken. In einem solchen Fall würden erhebliche Momente wirksam und der Grundrahmen müßte wesentlich stärker und verwindungssteifer ausgebildet werden. Durch die Anordnung des Schwerpunktes des Motors direkt über den Antriebsachsen muß der Grundrahmen das Motorgewicht nicht aufnehmen, das unmittelbar über die Befestigungsplatte, das Endgetriebe, die Antriebsachsen und die rückwärtigen Laufräder auf den Boden wirkt. Da damit von dem Motorgewicht ausgehende konzentrierte Momente vermieden oder zumindest reduziert sind, kann der Grundrahmen erheblich kostengünstiger ausgebildet werden.

Fahrzeugrahmen müssen aber auch noch anderen Belastungen standhalten, die beispielsweise beim Beschleunigen auftreten. Wird das Fahrzeug 10 bei der Vorwärtsfahrt beschleunigt, so muß die Drehzahl des Verbrennungsmotors erhöht werden und das Endgetriebe und die Laufräder drehen dann plötzlich schneller um. Dies führt zu einer Tendenz, daß das Fahrzeug um seine Treibachse, das heißt die rückwärtigen Antriebsachsen, nach oben und nach rückwärts verschwenken will. Bei einer plötzlichen Beschleunigung beim Rückwärtsfahren ist diese Tendenz umgekehrt und das Fahrzeug ist bestrebt, nach unten zu verschwenken. Von den angetriebenen Rädern aus werden dann diese Momente in den Fahrzeugrahmen eingeleitet, der diese auffangen muß. Das Endgetriebe des vorstehend beschriebenen Fahrzeuges 10 ist mit der Befestigungsplatte verschraubt, weshalb die beim Beschleunigen auftretenden und von den angetriebenen Rädern ausgehenden Kräfte zunächst in die Befestigungsplatte geleitet werden. Die Befestigungsplatte will in solchen Fällen um die Antriebsachsen verschwenken. Beim Beschleunigen bei Vorwärtsfahrt ist das nach oben, so daß auch der zweite Winkelteil, der frontseitig an der Befestigungsplatte vorgesehen ist, nach oben verschwenken will. Damit will auch das zweite Anschlußmittel nach oben und rückwärts verschwenken, wodurch an dieser Verbindungsstelle auf den Grundrahmen auch derart eingewirkt wird, daß er nach oben und rückwärts verschwenken will. An der Stelle des Grundrahmens, an der das zweite Anschlußmittel angreift, müßte der Grundrahmen entsprechend stabil ausgebildet sein, um diesen Kräften standzuhalten. Andererseits wäre zu befürchten, daß dann der Grundrahmen in diesem Bereich brechen könnte.

Beim bevorzugten Ausführungsbeispiel ist dies jedoch nicht zu befürchten, weil es die Prinzipien des Hebelgesetzes anwendet, um die beim Beschleunigen auftretenden und auf den Grundrahmen einwirkenden Kräfte zu reduzieren. Wie insbesondere aus der Fig. 5 hervorgeht, liegt das zweite Anschlußmittel mit einem beträchtlichen Abstand vor den Antriebsachsen, um die die Befestigungsplatte verschwenken will. Es ist damit ein Hebelarm geschaffen und die von dem Grundrahmen benötigte Kraft, um der Drehbewegung zu widerstehen, ist wegen des relativ langen Abstandes zwischen Drehpunkt und zweitem Anschlußmittel relativ gering. Je länger dieser Hebelarm ist, um so geringer ist die Kraft, die benötigt wird, um der Drehung zu widerstehen. Beim Ausführungsbeispiel ist der Hebelarm relativ lang, so daß die Gegenkraft gering ist, was sich wiederum darin ausdrückt, daß der Grundrahmen auch im Bereich der Anschlußstelle des zweiten Anschlußmittels relativ leicht und dünnwandig ausgebildet werden kann. Auch diese Befestigungsart trägt mit dazu bei, daß ein kostengünstiges Material, wie Plastikwerkstoff für den gesamten Grundrahmen Verwendung finden kann.

Wird das Fahrzeug 10 zum Grasmähen eingesetzt, so ist zwischen seinen Achsen das Mähwerksgehäuse 22 aufgehängt. Das gemähte Gras kann direkt auf dem abgemähten Rasen abgelegt werden, was jedoch vielfach nicht erwünscht ist. Moderne Fahrzeuge für den Rasenschnitt sind deshalb noch mit einem Grasfangbehälter ausgerüstet. Auch bei dem Fahrzeug des bevorzugten Ausführungsbeispiel ist dies möglich, da ein Grasfangbehälter, der der Einfachheit halber in der Zeichnung nicht dargestellt ist, an die Befestigungsplatte angebaut werden kann. Hierdurch wird das Gewicht des Grasfangbehälters direkt auf die Befestigungsplatte einwirken und im wesentlichen über das Endgetriebe auf die rückwärtigen Laufräder übertragen, ohne daß es direkt in den Grundrahmen geleitet würde. Gewisse Gewichtsanteile werden natürlich über die beiden Anschlußmittel in den Grundrahmen geleitet, doch sind diese wiederum relativ klein, so daß der Ausbildung des Grundrahmens aus Kunststoff auch die Anbringung eines Grasfangbehälters nicht im Wege steht.

Beim bevorzugten Ausführungsbeispiel sind im eingebauten Zustand der Motor, das Endgetriebe und auch der Riementrieb, der zwischen Motor und Endgetriebe vorgesehen ist, mit der Befestigungsplatte verschraubt, die damit alle diese Komponenten mit dem Grundrahmen des Fahrzeuges 10 verbindet. Die Antriebswelle 92 des Motors erstreckt sich durch die Befestigungsplatte nach unten und nimmt eine Riemenscheibe des Riementriebes auf, der zweckmäßig unterhalb der Befestigungsplatte angeordnet ist. Der Motor 34, das Endgetriebe 54, der Riementrieb und die sie tragende Befestigungsplatte 56 bilden das Modul 52, das als Einheit für Wartungsarbeiten von dem Fahrzeug 10 abgebaut werden kann. Hierzu müssen lediglich die Anschlußmittel entfernt werden, nachdem zu dem Schaltmodul und zu dem Kupplungs- und Bremspedal führende Gestängeverbindungen gelöst wurden. Auch sind natürlich entsprechende Versorgungsleitungen, wie Benzinleitung, Kabel etc, zu entfernen bzw. zu lösen. Sind alle Verbindungen zu dem Motor und dem Endgetriebe gelöst und auch die Anschlußmittel entfernt, so braucht der Grundrahmen nur angehoben und auf den vorderen Laufrädern nach vorne geschoben zu werden, um einen Zugang zu den drei vorgenannten Komponenten zu erhalten. Da der Grundrahmen aus Kunststoff hergestellt ist, kann er leicht an seinem rückwärtigen Ende von einer Wartungsperson hochgehoben werden. Für eine Wartung brauchen die nun von allen Seiten zugänglichen Komponenten nicht unbedingt auseinandergebaut zu werden. Die zusammengebauten Komponenten können nach ihrer Wartung vor dem Wiedereinbau leicht auf ihre einwandfrei Funktion überprüft werden. Zum Wiedereinbau des Moduls braucht der Grundrahmen lediglich nach rückwärts gerollt und über den ersten Winkelteilen abgelassen zu werden. Danach können die Anschlußmittel wieder eingesetzt werden.

Bei der Erstmontage bietet es sich an, daß die Komponenten zunächst mit der Befestigungsplatte verschraubt werden. Das so gebildete Modul kann dann noch vor dem Einbau auf seine Funktionstüchtigkeit überprüft werden.

Der Grundrahmen 16 mit Oberschale 14 läßt es außerdem zu, daß Motore und Endgetriebe unterschiedlicher Größe und Stärke auf die Befestigungsplatte 56 montierbar sind, ohne daß hierzu der Grundrahmen geändert werden müßte. Identisch ausgebildete Grundrahmen und Oberschalen können somit mit unterschiedlichen Getrieben und Motoren - je nach den Wünschen des Endverbrauchers - in einfacher Weise bestückt werden. Zusätzliche Herstellungs- und Werksstückkosten für unterschiedliche Grundrahmen und Oberschalen entstehen damit nicht.

### Vorderräder und Lenkung

In Fig. 1 der Zeichnung ist das Fahrzeug 10 mit lenkbaren vorderen Laufrädern 20 und einem Lenkrad 28 wiedergegeben, das am oberen Ende einer Lenksäule 50 angeordnet ist. Die Einzelheiten für die Übertragung einer Drehung am Lenkrad 28 auf die vorderen Laufräder 20 gehen aus den Fig. 10, 11, 12 und 13 hervor. Ebenso ist aus diesen Figuren zu entnehmen, wie die hierzu erforderlichen Gestänge und Plattenteile mit dem Grundrahmen 16 und der Oberschale 14 zu verbinden sind.

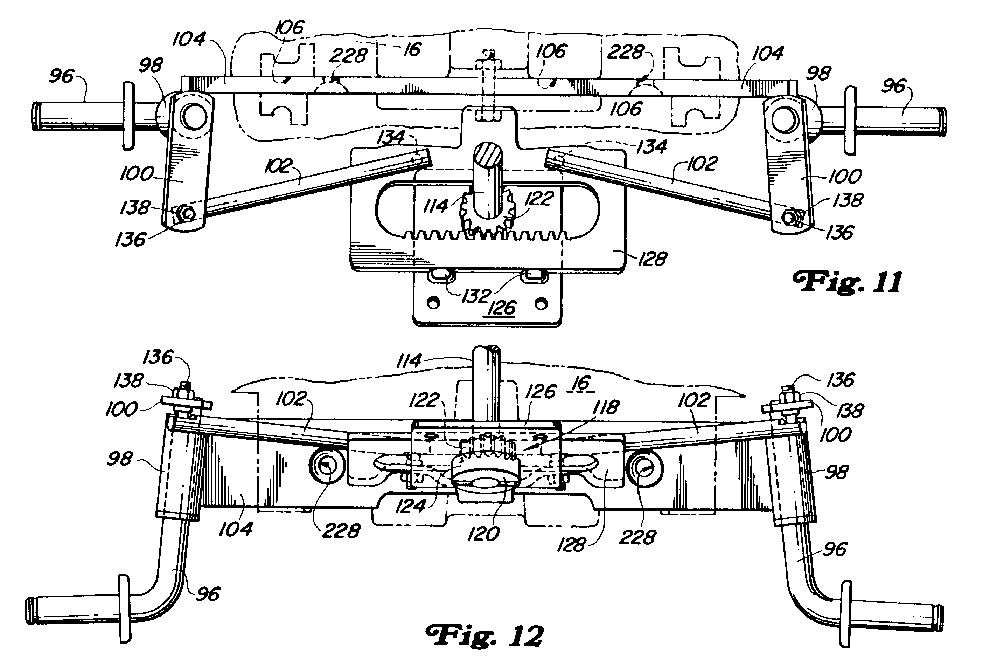

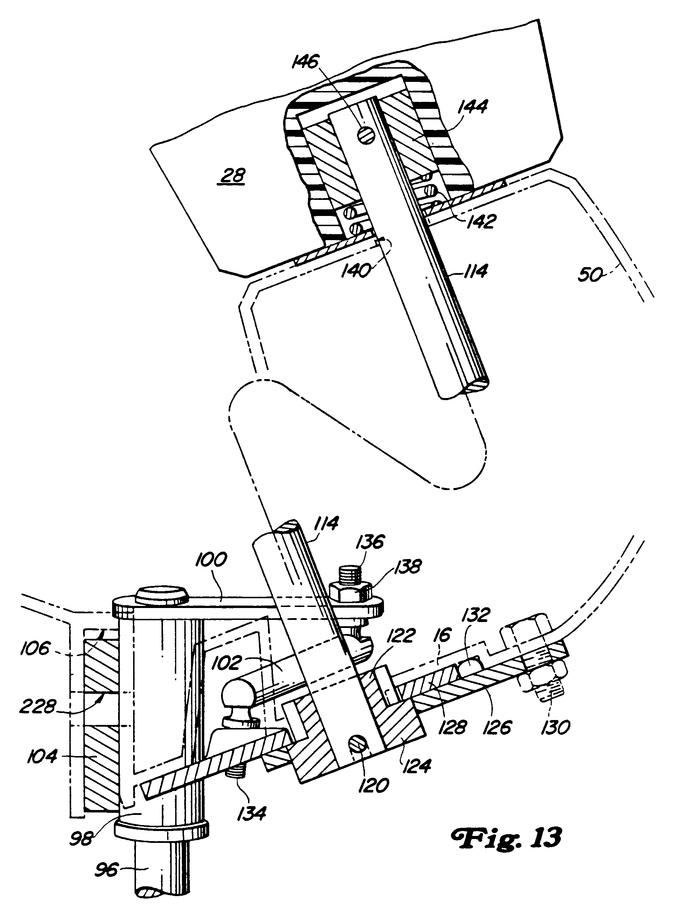

In der Fig. 10 ist der Grundrahmen 16 ausschnittsweise und im vergrößerten Maßstab mit den vorderen Laufrädern 20, deren Radachsenträgern 98, deren Kurbelarme 100 und deren Lenkstangen 102 teilweise in gestrichelten Linien eingezeichnet. Einzelheiten sind aus den Fig. 11 und 12 zu entnehmen, wobei Fig. 13 die Lenkeinrichtung in einer Seitenansicht wiedergibt.

Die vorderen Laufräder 20 sind auf L-förmig ausgebildeten Radachsen 96 angeordnet, die wiederum schwenkbar von den Radachsenträgern 98 aufgenommen sind. Die beiden Radachsenträger 98 sind an einer quer verlaufenden als Vorderachse dienenden Stange 104 angeschlossen, die ihrerseits in einem U-förmigen Kanal 106 sitzt, der Bestandteil des Grundrahmens 16 ist, wie es aus den Fig. 5 und 13 hervorgeht. Das vordere Paar Hubstangen 108 für das Mähwerksgehäuse ist durch die Stange 104 geführt und mit dieser über halbschalige Abstandshalter 110 und Mutter 112 in Verbindung. Diese Verbindung läßt eine oszillierende Bewegung der Hubstangen 108 mit Bezug auf die Stange 104 zu.

Wie bereits ausgeführt wurde, ist das Lenkrad 28 am oberen Ende einer Lenksäule 50 vorgesehen. Es ist mit einer Lenkwelle 114 verbunden, wie aus Fig. 13 zu ersehen ist. Diese ist durch die Lenksäule 50 nach unten geführt und weiter durch eine Öffnung 116 in dem Grundrahmen 16 (Fig. 4 und 10). In diesem unteren Bereich ist an die Lenkwelle 114 ein einstückiger Teil 118 über einen Stift 120 fest angeschlossen. Der Teil 118 ist in seinem oberen Bereich als Ritzel 122 und in seinem darunter liegenden Bereich als Scheibenlager 124 ausgebildet, dessen Oberseite gegen die Unterseite einer Zahnstangenplatte 128 anliegt.

Zum Lenken der vorderen Laufräder dient die bereits erwähnte Lenkeinrichtung, die als Zahnstangenlenkung ausgebildet ist. Eine Führungs- oder Stützplatte 126 ist, wie aus Fig. 13 zu erkennen ist, über eine Schraubverbindung 130 an die Unterseite des Grundrahmens 16 angeschlossen und nimmt zwischen sich und dem darüberliegenden Bereich des Grundrahmens 16, der hierzu nach oben versetzt ausgebildet ist, die Zahnstangenplatte 128 auf, die in Querrichtung verstellbar ist, wenn das Ritzel 122 sich in der einen oder anderen Richtung bei einem Lenkeinschlag des Lenkrades 28 dreht. Am frontseitigen Ende der Führungsplatte 126 sind noch zwei hochstehende Führungsteile 132 vorgesehen, gegen die die Zahnstangenplatte 128 mit ihrer vorderen Kante anliegt und die ein Verschieben der Zahnstangenplatte 128 nach vorne verhindern. Wie ferner insbesondere aus der Fig. 11 hervorgeht, ist die Zahnstangenplatte 128 mit einem quer verlaufenden Langloch versehen, das an seiner vorne liegenden Kante eine Verzahnung aufweist, in die das Ritzel 122 der Lenkwelle 114 eingreift. Damit kann bei einer Drehung des Ritzels 122 die Zahnstangenplatte 128 nach rechts oder links verstellt werden, wobei sie sich mit einer rückwärtigen Nase noch an einem rückwärtigen Grundrahmenteil abstützt. Wie ferner noch aus der Fig. 11 am besten erkennbar ist, greifen an dem rückwärtigen Bereich der Zahnstangenplatte 128 die beiden Lenkstangen 102 an, die dort über Schrauben 134 oder ähnliche Mittel angeschlossen werden können und sich von diesen Anschlußstellen nach außen zu den Hebelarmen 100 erstrecken, die an den Radachsen 96 angeflanscht sind. Schrauben 136 und Muttern 138 dienen zum Anschluß der Lenkstangen 102 an die Kurbelarme 100. Auf diese Weise ist eine Verbindung von dem Lenkrad 28 zu den vorderen Laufrädern hergestellt, die damit bei einem Einschlag des Lenkrades entsprechend eingeschlagen werden.

Zur Montage der Lenkeinrichtung an den Grundrahmen 16 wird zunächst die Stange 104 mit den bereits angeschlossenen Radachsen 96 und Kurbelarmen 100 in den am Grundrahmen vorgesehen Kanal 106 eingesetzt (Fig. 5, 11 und 13). Die Zahnstangenplatte 128 wird danach mit den Lenkstangen 102 verbunden, in die Aussparung an der Unterseite des Grundrahmens 16 eingesetzt und durch die Führungsplatte 126 gesichert, die von unten an den Grundrahmen 16 derart angeschraubt wird, daß die Zahnstangenplatte 128 zwischen dem Grundrahmen und der Führungsplatte 126 quer verschiebbar aufgenommen ist. Danach kann die rechte und linke Lenkstange 102 mit dem rechten und linken Kurbelarm 100 verbunden werden. Die Lenkwelle 114 wird dann mit dem das Ritzel 122 aufweisenden Teil 118 über den Stift 120 verbunden und von unten durch die Führungsplatte 126, die Zahnstangenplatte 128, die Öffnung 116 in dem Grundrahmen 16 in die Lenksäule 50 soweit geschoben, bis das Scheibenlager 124 gegen die Unterseite der Zahnstangenplatte 128 anliegt. Das obere Ende der Lenkwelle 144 wird dann durch eine am oberen Ende der Lenksäule 50 vorgesehene Öffnung 140 austreten und kann dann dort eine Feder 142 aufnehmen, die einerseits gegen die Außenwand der Lenksäule 50 und andererseits gegen die Unterseite einer Nabe 144 oder das Lenkrad 28 anliegt. Die Lenkwelle 114 wird schließlich noch über einen Stift 146 mit dem Lenkrad gesichert. Die Feder 144 ist bestrebt, die Lenkwelle 114 mit dem an ihrem unteren Ende vorgesehenen Ritzel 122 und Scheibenlager 124 nach oben zu ziehen. Hierdurch ergibt sich stets ein einwandfreier Eingriff des Ritzels 122 in die Verzahnung der Zahnstangenplatte 128. Die Lenkwelle 114 ist damit nach oben hin vorgespannt und etwaiges Spiel wird ausgeschaltet.

### Gestänge für Kupplung und Bremsen

Aus Fig. 3 ist zu erkennen, daß beiderseits der Lenksäule 50, und zwar in deren unteren Bereich, je eine Öffnung 58 für die Lagerung des Brems- und des Kupplungspedals 30 und 32 vorgesehen ist, und in den Grundrahmen 16 sind Führungen 148 für die Gestänge 60 und 62 integriert, die von den Pedalen 30, 32 zu dem Endgetriebe und zu der Bremse führen, wie es aus der Fig. 14 erkennbar ist.

Die Pedale 30, 32 erstrecken sich durch in der Lenksäule 50 vorgesehene Öffnungen 150 nach außen und sind auf einem Zapfen 157 gelagert, der sich wiederum durch die Öffnungen 58 in der Lenksäule 50 erstreckt. Über in die Pedale 30, 32 eingearbeitete Bohrungen 152 sind die Pedale innerhalb der Lenksäule 50 auf dem sich über die gesamte Breite der Lenksäule erstreckenden Zapfen 157 gelagert. Dies geht aus Fig. 14 hervor, die ebenfalls zeigt, daß die Pedale zueinander spiegelbildlich ausgebildet sind und eine U-förmige Tragvorrichtung 154 aufweisen, die durch die Öffnungen 152 in die Lenksäule 50 eingesetzt werden und dort von dem Zapfen 157 aufgenommen werden können.

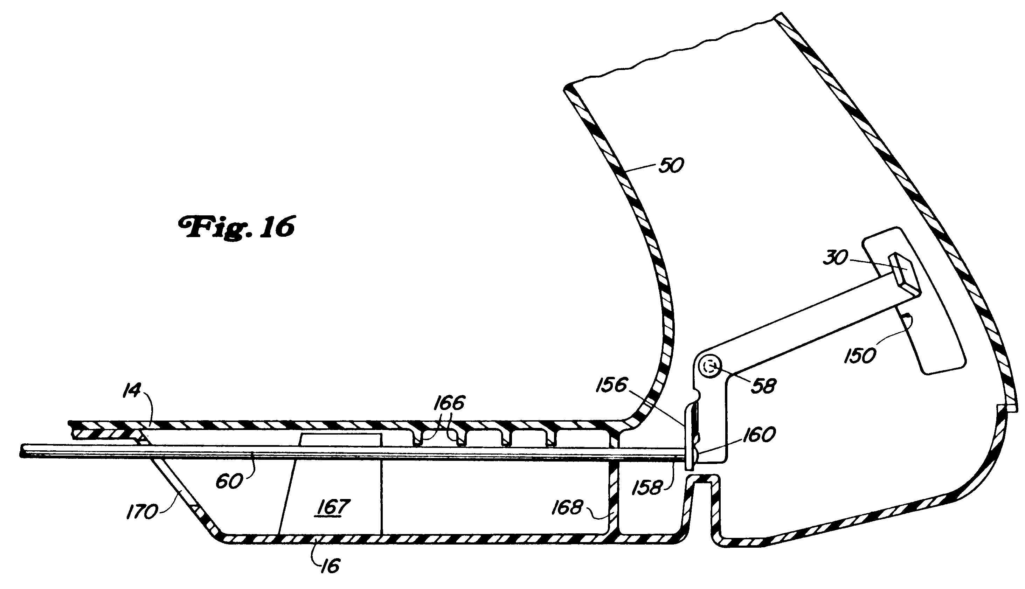

Beide Pedale 30, 32 sind darüberhinaus noch mit sich nach außen seitlich erstreckenden Armen 156 versehen, gegen die, wie es aus der Fig. 15 zu erkennen ist, die abgerundeten Enden 158 der Gestänge 60, 62 anliegen. Die abgerundeten Enden 158 greifen in kugelpfannenartige Ausbuchtungen 160 ein, die in die Arme 156 eingearbeitet sind. Am Ende des Gestänges 60 ist noch eine Druckfeder 164 angeordnet, die die beim Betätigen des Bremspedals 30 erforderliche Kraft limitieren soll. Die Druckfeder wirkt mit ihrem anderen Ende auf einen verschwenkbaren Bremsarm 186, der mit dem Gestänge 60 verbunden ist und bei seiner Betätigung die Bremse anlegt.

Bei Betätigung des Kupplungspedals 32 wird ein Riemen 90 entspannt, der die Antriebsverbindung zwischen dem Motor und dem Endgetriebe herstellt. Das Kupplungspedal wirkt auf eine Spannrolle, die auf einem Schwenkarm 172 angeordnet ist. Am Ende dieses Schwenkarmes 172 greift eine Feder 164 an, die bestrebt ist, die Spannrolle in eine Stellung zu verschwenken, in der der Riemen 90 gespannt ist.

Am rückwärtigen Ende des Fahrzeuges 10 sind noch zwei weitere Federn 176 und 190 vorgesehen, die einenends am Grundrahmen 16 und anderenends an den Gestängen 60, 62 bzw. an dem Schwenkarm 172 und dem Bremsarm 186 derart angreifen, daß die Gestänge 60, 62 nach vorne gedrückt werden, damit ihre vorderen Enden ständig in die Ausbuchtungen 160 an den Pedalen bzw. deren Armen 156 eingreifen können.

Die Führungen 148 weisen U-förmige Teile 166 und Stege 168 auf, die in den Grundrahmen 16 integriert sind und beim Einbau der Gestänge 60, 62 diese derart führen, daß ihre frontseitigen Enden automatisch zu den kugelpfannenartigen Ausbuchtungen 160 in den Pedalen geführt werden. Die Stege 168 sind hierzu noch mit entsprechenden Öffnungen 170 versehen.

Das Gestänge zum Betätigen der Kupplung ist an seinem rückwärtigen Ende nach unten abgebogen und erstreckt sich dort durch eine Bohrung in dem Schwenkarm 172, um diesen um seine Schwenkachse 182 verstellen zu können. An diesem Ende greift auch die Feder 176 an, die die Feder 164 darin unterstützt, das Gestänge 62 nach vorne zu ziehen, damit ihr abgerundetes vordere Ende 158 (Fig. 15) ständig in die Ausbuchtung 160 eingreifen kann. Das Schwenklager 182 für den Schwenkarm 172 liegt in einer Schwenkachse 180 und die Spannrolle 178 ist an dem Ende des Schwenkarms 172 angeordnet, das dem Anschluß des Gestänges 62 an den Schwenkarm abgelegen ist. Bei einer Betätigung des Kupplungspedals 32 wird das Gestänge 62 und damit auch der das Gestänge aufnehmende Schenkel des Schwenkarmes nach rückwärts verstellt. Gleichzeitig schwenkt der die Spannrolle 178 aufnehmende Schenkel des Schwenkarmes 172 nach vorne, wodurch der Riemen 90 entspannt und die Antriebsverbindung zu der Antriebswelle 92 des Motors unterbrochen wird. Wird das Kupplungspedal 32 wieder entlastet bzw. nicht mehr betätigt, so verschwenken die beiden Federn 164 und 176 den Schwenkarm 172 mit Bezug auf Fig. 14 wieder im Uhrzeigerdrehsinn in eine Stellung zurück, in der die Antriebsverbindung wieder hergestellt ist. In dieser Stellung ist der Riemen 90 gespannt.

Das rückwärtige Ende des Gestänges 60 für die Bremse ist durch einen Stift 184 geführt, der seinerseits mit dem Bremsarm 186 verbunden ist. Die bereits erwähnte Feder 162 ist auf das Gestänge 60 aufgesteckt und liegt mit ihrem einen Ende gegen eine auf dem Gestänge 60 festgesetzte Scheibe 188 und mit ihrem anderen Ende gegen den Stift 184 an. Auf diese Weise drückt die Feder 162 nach vorne. Sie wird dabei von der Feder 190 unterstützt, die an dem Bremsarm 186 und an dem Grundrahmen oder an dem Endgetriebe angreift, um bei nicht betätigtem Bremspedal die Bremse auszurücken bzw. in ihrer ausgerückten Stellung zu halten. Beide Federn 162 und 190 drücken damit auch das Gestänge 60 nach vorne, daß somit immer im Eingriff mit der Ausbuchtung 160 in dem Arm 156 des Bremspedals verbleibt. Sie schwenken außerdem das Bremspedal in seine Ausgangslage zurück. Diese Verschwenkung erfolgt gegen den Uhrzeigerdrehsinn um den Zapfen 157.

Die Montage der beiden Pedale 30 und 32 und der zugehörigen Gestänge 60, 62 erfolgt, nachdem das Modul 52 aus Motor und Endgetriebe mit dem Rahmenaufbau 12 verschraubt worden ist. Zunächst werden die beiden Pedale 30, 32 durch die in der Lenksäule vorgesehenen Öffnungen 152 eingesetzt und auf dem Zapfen 157 gelagert, der durch die Öffnung 58 geführt werden muß. Danach werden die Gestänge 60, 62 vom rückwärtigen Ende des Fahrzeuges 10 aus durch nach vorne Schieben eingesetzt, nachdem die Feder 162, die Scheibe 188 und der Stift 184 montiert worden sind. Auf ihrem Weg nach vorne werden die Gestänge zuerst durch die am weitesten hinten liegenden Öffnungen 170 gesteckt und dann durch die Teile 166 weiter nach vorne geführt und schließlich durch die Öffnung im vorderen Steg 168, die zu den Ausbuchtungen 160 ausgerichtet sind. Sobald die gerundeten frontseitigen Enden 158 der Gestänge 60, 62 in die Ausbuchtungen 160 eingreifen, werden die rückwärtigen Enden der Gestänge mit dem Schwenkarm 172 bzw. mit dem Bremsarm 186 verbunden. Abschließend sind noch die Federn 164, 176 und 190 zu installieren.

### Schalt- und Parkhebel

In den Fig. 1, 17, 18 und 19 ist ein diesbezüglicher Mechanismus dargestellt.

In Fig. 1 ist die Schaltkulisse 26 neben dem Fahrersitz 24 erkennbar. Ein Bedienungshebel 64 erstreckt sich durch diese nach oben, so daß er leicht von einer Bedienungsperson erfaßt werden kann. Dieser Bedienungshebel dient zum Schalten des Fahrzeuges und gleichzeitig zum Feststellen der Fahrzeugbremsen, wenn sich das Endgetriebe in seiner Neutralstellung befindet. Im Bereich dieses Bedienungshebels 64 befindet sich noch ein Gashebel 192. In Fig. 17 ist eine etwa Z-förmig ausgebildete Stange 194 zu erkennen, die sich zwischen dem Bedienungshebel 64 und einem Getriebeschaltarm 196 erstreckt. Wird der Bedienungshebel 64 in einem sich in der Schaltkulisse 26 befindlichen Schaltschlitz 198 in Fahrzeuglängsrichtung zwischen den Stellungen R, N, und 1, 2, 3, 4, 5 verschwenkt, dann werden die Stange 194 und der Getriebeschaltarm 196 so verstellt, daß das Endgetriebe in herkömmlicher Weise geschaltet werden kann.

Der Bedienungshebel 64 ist aber auch so ausgebildet, daß er die Bremse des Fahrzeuges feststellen kann. Hierzu ist das untere Ende des Bedienungshebels 60 etwa U-förmig ausgebildet und weist dort einen Schenkel 200 auf, der über eine Schwenkverbindung 202 mit dem Grundrahmen 16 verbindbar ist. Der Grundrahmen weist hierzu eine in Fig. 4 erkennbare Öffnung mit Sitz 204 auf, wobei die Schwenkverbindung derart gestaltet ist, daß der Bedienungshebel eine Schwenkung in Fahrzeuglängsrichtung aber auch in Fahrzeugquerrichtung ausführen kann. Ein zweiter zu dem ersten Schenkel 200 mit Querabstand angeordneter Schenkel 206 erstreckt sich ebenfalls durch die Öffnung 204 nach unten bis in einen Kanal 210, der zwischen zwei vom Grundrahmen 16 nach unten weisenden Nasen 212 gebildet ist. Eine Feder 214 greift noch an dem Bedienungshebel 64 derart an, daß sie bestrebt ist, den Bedienungshebel 64 in Fahrzeugquerrichtung derart zu verstellen, daß der zweite Schenkel 206 in seinem Kanal oder der Führung 210 nach oben verstellt wird. Der zweite Schenkel 206 ist L-förmig ausgebildet und damit mit einem seitlichen Ausleger versehen, der sich unterhalb des Bremsgestänges befindet. Seitlich vorspringende und in den Grundrahmen integrierte Teile 216 und 218 verhindern, daß auch das Bremsgestänge 60 in Vertikalrichtung verstellbar ist, wenn der zweite Schenkel unter der Wirkung der Feder 214 sich nach oben verstellen will und das Bremspedal 30 noch nicht vollständig heruntergetreten ist.

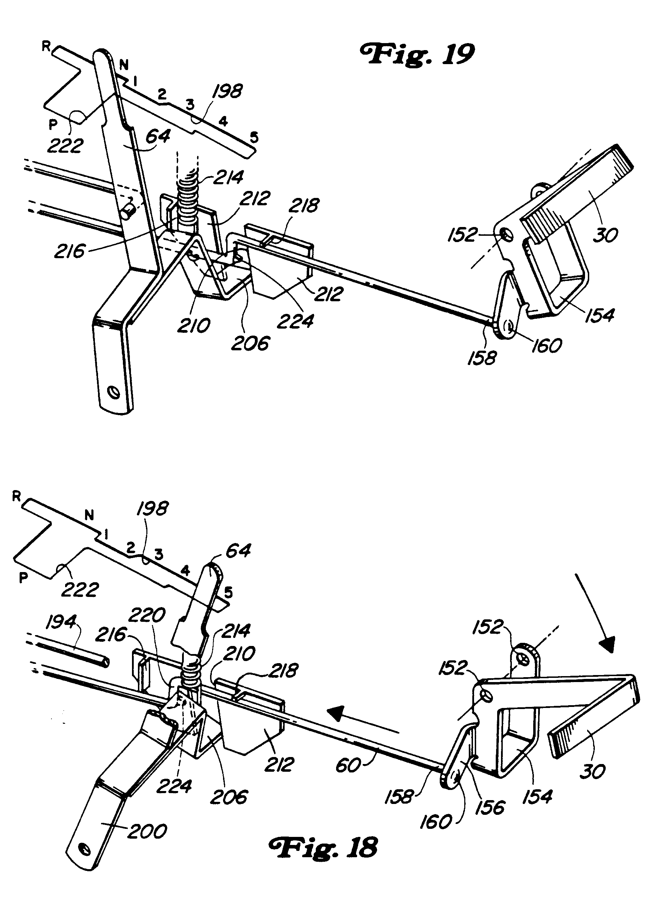

Das im wesentlichen horizontal verlaufende Bremsgestänge 60 ist etwa in seinem mittigen Bereich mit einem abgesetzten Teil oder vertikal verlaufenden Schenkel 220 versehen, der mit dem L-förmig ausgebildeten Schenkel 206 des Bedienungshebels 64 zusammenwirkt, um das Bremsgestänge und damit auch die Bremse feststellen zu können. Der Bedienungshebel 64 nimmt damit neben seiner Schaltfunktion auch die Aufgabe eines Bremsfeststellhebels wahr. Um die Bremse feststellen zu können, muß die Bedienungsperson zunächst den Bedienungshebel 64 in seine Neutralstellung N zurückschwenken, sofern er sich vorher in einer Schaltstellung befunden haben sollte. Danach wird das Bremspedal 30 im Uhrzeigerdrehsinn in seine in Fig. 18 wiedergegebene Stellung verschwenkt. Bei diesem Vorgang verschiebt sich das Bremsgestänge 60 zusammen mit seinem vertikalen Schenkel 220 nach rückwärts, der Bremshebel 186 wird entgegen dem Uhrzeigerdrehsinn verstellt und die Bremse ist angezogen. Sobald der vertikale Schenkel 220 bei der Rückwärtsbewegung des Bremsgestänges 60 sich hinter dem Schenkel 206 des Bedienungshebels 64 befindet, wird infolge der Feder 214 der L-förmige Schenkel 206 in seiner Führung 210 nach oben schwenken und sich mit seinem Ausleger vor den vertikalen Schenkel 220 legen. Gleichzeitig wird das obere Ende des Bedienungshebels 64 eine Querbewegung ausführen und in den in der Schaltkulisse 26 vorgesehen Parkschlitz 222 eintreten, wie es in Fig. 17 angedeutet ist.

Am unteren Ende des vertikalen Schenkels 220 des Bremsgestänges 60 ist noch eine Nase 224 vorgesehen, die verhindern soll, daß sich der Bedienungshebel ungewollt aus seiner Parkstellung zurückstellt. Um die Parkbremse lösen zu können, muß die Bedienungsperson das Bremspedal 30 nochmals etwas weiter heruntertreten, wobei das Bremsgestänge noch etwas weiter zurückgestellt wird und die Nase 224 den Schenkel 206 freigibt. Danach kann der Bedienungshebel in seine Neutralstellung zurückverschwenkt werden und die Federn 162 und 190 schieben das Bremsgestänge wieder nach vorne in seine Ausgangsstellung.

### Mähwerksgehäuseaufhängung und Höheneinstellung

Die Aufhängung des Mähwerksgehäuses 22 und ein Gestänge für seine Höheneinstellung sind am besten aus den Fig. 5, 6, 10 und 20 zu erkennen.

Fig. 5 zeigt, daß das Mähwerksgehäuse 22 über vordere und rückwärtige Hubstangen 108 und 226 aufgehängt ist. In der Seitenansicht der Fig. 5 sind nur eine vordere und eine rückwärtige Stange erkennbar. Doch sind mit seitlichem Abstand zu diesen beiden Stangen noch zwei weitere Stangen vorgesehen, so daß ein Parallelgestänge mit einem Paar vorderer und einem Paar rückwärtiger Stangen gebildet ist und das Mähwerksgehäuse immer parallel höhenverstellbar ist.

Die frontseitigen Hubstangen 108 sind mit der quer verlaufenden Stange 104 verbunden. Fig. 5 und 10 zeigen, daß die vorderen Enden der Hubstangen 108 mit Gewinde versehen sind, durch in der Stange 104 vorgesehene Öffnungen 228 gesteckt sind und dort über die halbkugelförmigen Abstandshalter 110 und die Muttern 112 gehalten sind (Fig. 5). Damit können die vorderen Hubstangen 108 um ihre Anschlußstellen in der Stange 104 oszillierende Bewegungen ausführen. Der vordere Bereich des Mähwerksgehäuses kann dabei entsprechend mitverkippen, wenn beispielsweise die Stange 104 vertikal verschwenkt.

Die beiden rückwärtigen Hubstreben 226 vervollständigen das Parallelgestänge mit vier Stangen zum Tragen des Mähwerksgehäuses 22. Die rückwärtigen Hubstreben 226 sind L-förmig ausgebildet und weisen damit einen Schenkel an ihrem oberen Ende auf, der von einer im Grundrahmen 16 vorgesehen Öffnung 230 (Fig. 4, 5 und 6) aufgenommen ist und von diesem in einem Auflager 232 getragen wird. Die Auflager lassen eine Schwingbewegung der Hubstangen 226 zu, wenn das Mähwerksgehäuse angehoben oder abgesenkt wird.

Fig. 20 läßt die Vorrichtung zur Höheneinstellung des Mähwerksgehäuses am besten erkennen. Man erkennt zwei Hubarme 234, die zueinander Querabstand aufweisen, sich in Fahrzeuglängsrichtung erstrecken und an ihren rückwärtigen Enden in in Fig. 4 eingezeichneten Auflagern 236 mit gerundeten Auflageflächen angeordnet sind, die ebenfalls in den Grundrahmen 16 integriert sind. Die rückwärtigen Enden der Hubstangen 234 haben hierzu Lageraugen, mit denen sie in den Auflagern gehalten sind. Etwa in einem mittigen Bereich sind die Hubarme 234 mit dreieckförmigen Öffnungen 238 versehen, durch die sich Hubstangen 240 erstrekken. Diese sind in den Hubarmen 234 allseits beweglich gehalten, wozu eine Kugelzapfenlagerung 242 vorgesehen ist. Muttern 244 sichern die Hubstangen 240 gegen ein Herunterfallen der Hubstangen aus den Hubarmen 234. Im Bereich ihrer dreieckförmigen Öffnungen 238 sind die beiden Hubarme 234 noch durch einen ersten Querteil 246 miteinander verbunden. Die frontseitigen Enden der beiden Hubarme 23 stehen durch einen zweiten als Handgriff ausgebildeten Querteil 248 miteinander in Verbindung.

Aus Fig. 20 ist zu entnehmen, daß der rückwärtige Querteil 246 noch mit einem nach vorne zeigenden Auflagefinger 250 versehen ist, der auf einer der Stufen 252 eines quer verschiebbaren Tragteils 254 zur Auflage kommen kann. Der Tragteil 254 ist innerhalb eines Schlitzes 256 quer verschiebbar, der aus zwei konzentrischen und in den Boden des Grundrahmens 16 integrierten Leisten gebildet ist. Der Schlitz 256 dient somit auch als Führung, und der Tragteil 254 kann in der Führung durch nach vorne vorstehende Schenkel 258 gegen seitliches Verschieben gesichert werden. Durch den Tragteil 254 erstreckt sich noch ein mit diesem verbundener Schwenkhebel 260, der mit seinem rückwärtigen Ende 262 schwenkbar von einer Öffnung 264 aufgenommen ist, die wiederum an dem Grundrahmen 16 vorgesehen ist. Das frontseitige Ende des Schwenkhebels 260 wird durch einen Griff 266 gebildet, der aus dem Grundrahmen 16 unmittelbar vor dem Fahrersitz 24 austritt und von einer Bedienungsperson verstellt werden kann.

Um die Schnitthöhe des Mähwerkes verstellen zu können, zieht die Bedienungsperson zunächst den als Griff ausgebildeten Querteil 248 nach oben, wodurch auch die Hubarme 234 nach oben verschwenkt werden. Da die Hubarme mit ihren unteren Enden an das Mähwerksgehäuse 22 angeschlossen sind, wird dann infolge des aus den Hubstangen 226 und 108 gebildeten Parallelgestänges auch das Mähwerk angehoben. Die Bedienungsperson wird danach den unterschiedliche Höhenstufen aufweisenden Tragteil 254 nach rechts oder links seitlich verstellen und den Auflagefinger 250 wieder auf eine andere Stufe 252 ablassen, wodurch das Mähwerksgehäuse eine höher oder tiefer liegende Stellung als vorher einnehmen kann.

Der aus den Leisten gebildete Schlitz 256 bzw. eine der Leisten ist noch mit Rasterstellen 268 versehen, in die der Tragteil 254 einrasten kann, wenn das Gewicht des Mähwerkes die Hubarme 234 nach unten zieht. Der Tragteil ist dann gegen ein seitliches Verstellen gesichert. Beim seitlichen Verschieben des Tragteils rutscht dieser über die Rasterstellen 268.

### Sitzgestell mit Einstellvorrichtung

Ein Sitzträger und eine Einstellvorrichtung für den Sitz ist in den Fig. 3, 4, 20, 21 und 22 dargestellt.

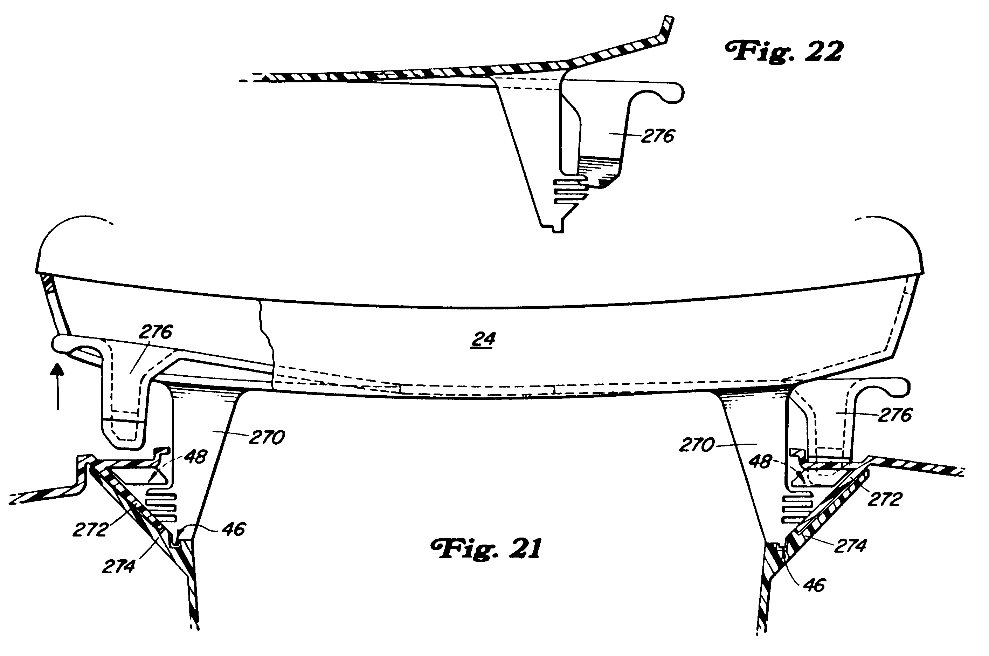

Aus Fig. 20 sind zwei sich in Fahrzeuglängsrichtung erstreckende und den Sitz aufnehmende Kanäle 46 zu erkennen, die an dem Grundrahmen 16 angeordnet sind. Diese Kanäle sind in Fig. 21 im Schnitt dargestellt. Sie nehmen Fußstützen 270 auf, die an den Sitz angeformt sind. Die Oberschale 14 ist mit seitlich gerichteten Flanschen 272 ausgerüstet, die, wenn die Oberschale 14 mit dem Grundrahmen 16 verbunden ist, auf den Seitenwänden 274 des Grundrahmens 16 aufliegen. Im miteinander verbundenen Zustand dienen die Flansche 272 und die Seitenwände 274 als seitlicher Träger für die Fußstützen 270, die in den Kanälen 46 längsverstellbar und in einer Vielzahl von Längsstellungen feststellbar sind.

Zum Festsetzen des Sitzes in einer gewünschten Längsstellung ist die Oberschale 14 mit einer Vielzahl von hintereinander liegenden und in zwei Reihen angeordneten Rasterstellungen 48 versehen, in die an den Sitz angeformte, flexible und nach unten weisende Vorsprünge 276 oder Nasen eingreifen können. Diese Nasen können von der Bedienungsperson erfaßt und nach oben gezogen werden, wie es auf der linken Seite in Fig. 21 dargestellt ist. Läßt die Bedienungsperson die Vorsprünge 276 wieder los, nachdem eine neue Sitzposition eingestellt wurde, dann springen die durch einen Biegeteil miteinander verbundenen Vorsprünge 276 auf Grund der ihnen innewohnenden Flexibilität in die Rasterstellungen 48 zurück, wie es auf der rechten Seite der Fig 21 erkennbar ist. Der Sitz ist dann gegen Längsverschieben gesichert.

Fig. 22 zeigt einen Vorsprung 276 in einem Zustand, wenn der Sitz nicht montiert ist. Der Vorsprung nimmt dann eine noch tiefer liegende Stellung ein, als sie in Fig. 21 auf der rechten Seite dargestellt ist. Hieraus folgt, daß im eingebauten Zustand die Vorsprünge 276 vorgespannt sind und dadurch nicht selbsttätig aus den Rasterstellen 48 austreten können.

### Batterieanordnung

Aus den Fig. 3, 4 und 20 ist ein Gehäuseabschnitt zu erkennen, über dem der Sitz angeordnet ist. In diesem Gehäuseabschnitt kann eine Batterie untergebracht werden, wobei der Boden des Grundrahmens 16 mit hochstehenden und winkelförmig angeordneten Leisten 278 und 280 versehen ist, gegen die die Batterie zur Anlage kommen kann. Entsprechend winkelförmig angeordnete Leisten sind auch an der anderen Seite am Boden des Gehäuseabschnittes angeordnet und können, falls dies erwünscht ist auch im frontseitigen Bereich des Bodens des Gehäuseabschnittes vorhanden sein. Die Frontseite des Gehäuseabschnittes ist noch mit einer Abdeckung 282 versehen. Sie kann schwenkbar an den Seiten des Gehäuseabschnittes angelenkt sein und mit Rippen oder ähnlichen Teilen versehen sein, über die der obere Teil der Batterie im geschlossenen Zustand der Abdeckung arretiert werden kann.

Aus der vorstehenden Beschreibung geht damit hervor, daß der Grundrahmen mit Befestigungsstellen, Schwenkpunkten und Führungen für den Verbrennungsmotor, das Endgetriebe, die vorderen Laufräder, das Lenkgestänge, für das Gestänge für die Bremsen und die Kupplung, das Schaltgestänge, die Parkbremse, den Sitz usw. versehen ist. Teilweise sind diese Befestigungsstellen, Schwenkpunkte und Führungen auch in die Oberschale integriert.

Die gewählte Schalenbauweise reduziert die Anzahl der Einzelteile erheblich und auch die Zeit, um ein solches Fahrzeug zusammenzubauen.

## Patentansprüche

1. Fahrzeug mit einem unteren Rahmenteil (16) und einem mit diesem verbundenen Fahrzeugaufbau (14), dadurch gekennzeichnet, daß der Rahmenteil (16) aus einem Faser verstärkten Kunststoff und der Fahrzeugaufbau (14) aus Kunststoff bestehen und angeformte Mittel aufweisen, um an diesen einen Motor (34), ein Endgetriebe (54) mit zugehörigen antreibbaren Laufrädern (18) und eine Stütze für nicht angetriebene Laufräder (20) mit schwenkbaren Lenkmitteln anschließen zu können.

2. Fahrzeug nach Anspruch 1, dadurch gekennzeichnet, daß der Motor (34) und das Endgetriebe (54) ein Modul (52) bilden, das eine Befestigungsplatte (56) aufweist, über die der Motor (34) und das Endgetriebe (54) mit dem Rahmenteil (16) verbindbar sind.

3. Fahrzeug nach Anspruch 2, dadurch gekennzeichnet, daß die Verbindungsmittel zum Anschließen der Befestigungsplatte (56) an den Rahmenteil (16) Abstandshalter (Muttern 84) aufweisen, die beim Spannen der Verbindungsmittel eine Kompression des Rahmenteiles limitieren.

4. Fahrzeug nach Anspruch 2, dadurch gekennzeichnet, daß die Befestigungsplatte (56) mit Randbereichen des Rahmenteiles (16) über eine Vielzahl von Schrauben (68) und Plattenteilen (82) verbindbar ist.

5. Fahrzeug nach Anspruch 2, dadurch gekennzeichnet, daß der Motor (34) eine Antriebswelle (92) mit einer Antriebsriemenscheibe und die Befestigungsplatte (56) eine verschwenkbare Spannrolle (178) aufweist, die mit der Antriebsriemenscheibe über einen Riemen (90) verbunden und in eine Stellung verschwenkbar ist, die von der Antriebsscheibe weiter ab liegt und in der der Riemen (90) gespannt ist.

6. Fahrzeug nach Anspruch 1, dadurch gekennzeichnet, daß der Rahmenteil (16) mindestens einen sich nach unten hin erstreckenden Kanalteil (106) aufweist, in dem eine Lenkeinheit mit zwei lenkbaren Laufrädern (20) aufgenommen ist.

7. Fahrzeug nach Anspruch 6, dadurch gekennzeichnet, daß der Kanalteil (106) eine quer verlaufende Stange (104) aufnimmt, an der die schwenkbaren Lenkmittel angeordnet sind.

8. Fahrzeug nach Anspruch 7, dadurch gekennzeichnet, daß die Lenkmittel an einer Zahnstangenlenkeinrichtung angreifen, die an dem Rahmenteil (16) angeordnet und über eine Lenkwelle (114) betätigbar ist, die ihrerseits in einer nach oben weisenden mit dem Rahmenteil (16) verbundenen Lenksäule (50) angeordnet ist.

9. Fahrzeug nach Anspruch 8, dadurch gekennzeichnet, daß die Lenkwelle (114) an ihrem unteren Ende mit einem Ritzel (122), das mit der Zahnstangenlenkeinrichtung in Wirkverbindung steht, und an ihrem oberen Ende mit einem Lenkrad (28) verbunden ist.

10. Fahrzeug nach Anspruch 7, dadurch gekennzeichnet, daß die quer verlaufende Stange (104) über eine Bolzenverbindung in dem Kanalteil (106) angeschlossen ist.

11. Fahrzeug nach Anspruch 7, dadurch gekennzeichnet, daß unterhalb des Rahmenteils (16) ein Mähwerksgehäuse (22) über ein vorderes und ein rückwärtiges Paar von Hubstangen (108, 226) aufgehängt ist, die mit ihren unteren Enden an dem Mähwerksgehäuse (22) angelenkt sind, wobei die oberen Enden des rückwärtigen Paares von Hubstangen (226) an dem Rahmenteil (16) und die oberen Enden des vorderen Paares von Hubstangen (108) an der quer verlaufenden Stange (104) schwenkbar aufgehängt sind.

12. Fahrzeug nach Anspruch 11, dadurch gekennzeichnet, daß die Verbindungsmittel zwischen der quer verlaufenden Stange (104) und dem vorderen Paar von Hubstangen (108) mit Bezug auf die quer verlaufende Stange (104) eine begrenzte Schwenkbewegung in Querrichtung zulassen.

13. Fahrzeug nach einem oder mehreren der vorherigen Ansprüche, dadurch gekennzeichnet, daß der Rahmenteil (16) und der Fahrzeugaufbau (14) derart ausgebildet sind, daß sie zwei lenkbare Laufräder (20), Lenkmittel für die lenkbaren Laufräder (20) und Kupplungs- und Bremsmittel aufnehmen können.

14. Fahrzeug nach Anspruch 13, dadurch gekennzeichnet, daß die Kupplungs- und Bremsmittel ein Kupplungs- und ein Bremspedal (30, 32) aufweisen, die schwenkbar an dem Fahrzeugaufbau (14) angeordnet sind.

15. Fahrzeug nach Anspruch 14, dadurch gekennzeichnet, daß die Pedale (30, 32) schwenkbar im Inneren der Lenksäule (50), die Bestandteil des Fahrzeugaufbaues (14) ist, angeordnet sind und je eine Tretfläche aufweisen, die sich aus der Lenksäule (50) nach außen erstrecken.

16. Fahrzeug nach Anspruch 14, dadurch gekennzeichnet, daß die Kupplungs- und Bremsmittel Gestänge (60, 62) aufweisen, die in Führungskanälen, die von und zwischen dem Rahmenteil (16) und dem Fahrzeugaufbau (14) gebildet sind, angeordnet und mit dem Endgetriebe (54) und mit Bremsen für die antreibbaren Laufräder (18) verbunden sind.

17. Fahrzeug nach Anspruch 16, dadurch gekennzeichnet, daß die Führungskanäle durch am Rahmenteil (16) und an dem Fahrzeugaufbau (14) angeformte U-förmige Schlitze gebildet sind, die gegeneinander anliegen.

18. Fahrzeug nach Anspruch 16, dadurch gekennzeichnet, daß jedes Gestänge (60, 62) an seinem frontseitigen Ende abgerundet ist und mit diesen Enden in konkave Ausbuchtungen (160) gedrückt wird, die in den Pedalen (30, 32) vorgesehen sind.

19. Fahrzeug nach Anspruch 16, dadurch gekennzeichnet, daß das Gestänge (60) für die Bremse mit einem Bedienungshebel (64) operativ verbunden ist, der schwenkbar an dem Rahmenteil (16) angeordnet und in eine Stellung verschwenkbar ist, in der das Gestänge (60) für die Bremse in einer Stellung festgestellt ist, in der die Bremse angezogen ist.

20. Fahrzeug nach Anspruch 19, dadurch gekennzeichnet, daß der Bedienungshebel (64) einen ersten Schenkel (200) aufweist, der mit dem Rahmenteil (16) derart schwenkbar verbunden ist, daß er in und quer zur Fahrzeuglängsrichtung verstellbar ist.

21. Fahrzeug nach Anspruch 20, dadurch gekennzeichnet, daß der Bedienungshebel (64) einen zweiten Schenkel (220) aufweist, der für eine wechselseitige Bewegung in einem Kanal des Rahmenteils (16) angeordnet ist.

22. Fahrzeug nach Anspruch 13, dadurch gekennzeichnet, daß der Fahrzeugaufbau (14) Vorrichtungen zur Aufnahme eines Getriebeschalthebels aufweist, der in Fahrzeuglängsrichtung verstellbar und mit dem Endgetriebe (54) verbunden ist.

23. Fahrzeug nach Anspruch 13, dadurch gekennzeichnet, daß der Fahrzeugaufbau (14) in der endgültigen Farbgebung aus Kunststoff gießbar ist.

24. Fahrzeug nach Anspruch 13, dadurch gekennzeichnet, daß der Rahmenteil (16) mit einer sich nach rückwärts erstreckenden Anhängevorrichtung (36) ausgerüstet ist.

25. Fahrzeug nach Anspruch 13, dadurch gekennzeichnet, daß der Rahmenteil (16) Bestandteil eines Fahrzeuges (10) für die Rasen- und Gartenpflege ist und über eine Hubvorrichtung ein Mähwerksgehäuse (22) höhenverstellbar aufnimmt.

26. Fahrzeug nach Anspruch 25, dadurch gekennzeichnet, daß die Hubeinrichtung eine mit dem Rahmenteil (16) vertikal schwenkbar verbundene und von Hand betätigbare Höheneinstellvorrichtung aufweist, die in verschiedenen Höhenstellungen festlegbar und über zwei Hubstangen (240) mit dem Mähwerksgehäuse (22) verbunden ist.

27. Fahrzeug nach Anspruch 13, dadurch gekennzeichnet, daß der Rahmenteil (16) und der Fahrzeugaufbau (14) mit einer Aufnahmevorrichtung für einen in Fahrzeuglängsrichtung verstellbaren Fahrersitz (24) versehen sind, die eine erste Fläche mit einer horizontalen Komponente, über die das Gewicht des Fahrers und des Sitzes (24) auf den Rahmenteil (16) und auf den Fahrzeugaufbau (14) übertragbar sind, und eine zweite sich seitlich erstreckende Fläche aufweist, gegen die der Sitz (24) anliegt, um zu verhindern, daß der Sitz (24) unter dem Gewicht des Fahrers sich nach außen verschiebt.

28. Fahrzeug nach Anspruch 27, dadurch gekennzeichnet, daß der Fahrzeugaufbau (14) mit zwei Reihen hintereinanderliegender Rasterstellen (48) versehen ist, in die der Sitz (24) wahlweise einrastbar ist.

## Claims

1. A vehicle with a lower frame part (16) and a vehicle body (14) connected thereto, characterized in that the frame part (16) and the vehicle body (14) consist of a fibre-reinforced plastics material and plastics material respectively and comprise means formed therein in order to be able to attach thereto an engine (34), a transaxle (54) with associated drivable runing wheels (18) and a support for non-driven runing wheels (20) with pivotable steering means.

2. A vehicle according to claim 1, characterized in that the engine (34) and the transaxle (54) form a module (52) which comprises a mounting plate (56), through which the engine (34) and the transaxle (54) can be attached to the frame part (16).

3. A vehicle according to claim 2, characterized in that the attaching means for attaching the mounting plate (56) to the frame part (16) comprise spacer means (nuts 84) which limit compression of the frame part on tightening the attaching means.

4. A vehicle according to claim 2, characterized in that the mounting plate (56) can be attached to edge regions of the frame part (16) through a plurality of screws (68) and plate parts (82).

5. A vehicle according to claim 2, characterized in that the engine (34) comprises a drive shaft (92) with a drive pulley and the mounting plate (56) comprises a pivotable tensioning roller (178) which is coupled to the drive pulley through a belt (90) and can be swung into a position which lies more remote from the drive pulley and in which the belt (90) is tensioned.

6. A vehicle according to claim 1, characterized in that the frame part (16) comprises at least one downwardly extending channel section (106), in which a steering unit with two steerable running wheels (20) is received.

7. A vehicle according to claim 6, characterized in that the channel section (106) receives a transversely running bar (104), on which the pivotable steering means are arranged.

8. A vehicle according to claim 7, characterized in that the steering means engage a rack-steering device, which is arranged on the frame part (16) and is operable by means of a steering shaft (114) which for its part is arranged in an upwardly extending steering column (50) attached to the frame part (16).

9. A vehicle according to claim 8, characterized in that the steering shaft (114) is connected at its lower end to a pinion (122), which is operatively connected to the rack steering device, and at its upper end to a steering wheel (28).

10. A vehicle according to claim 7, characterized in that the transversely extending bar (104) is fixed in the channel section (106) by a bolt attachment.

11. A vehicle according to claim 7, characterized in that a mower mechanism housing (22) is suspended below the frame part (16) by means of forward and rearward pairs of lift rods (108, 226), which are linked to the mower mechanism housing (22) at their lower ends, wherein the upper ends of the rear pair of lift rods (226) are pivotally suspended on the frame part (16) and the upper ends of the front pair of lift rods (108) are pivotally suspended from the transversely extending bar (104).

12. A vehicle according to claim 11, characterized in that the attaching means between the transversely extending bar (104) and the front pair of lift rods (108) allow limited pivotal movement in the transverse direction relative to the transversely extending bar (104).

13. A vehicle according to one or more of the preceding claims, characterized in that the frame part (16) and the vehicle body (14) are formed such that they can receive two steerable running wheels (20), steering means for the steerable running wheels (20) and clutch and brake means.

14. A vehicle according to claim 13, characterized in that the clutch and brake means comprise clutch and brake pedals (30, 32), which are arranged pivotally on the vehicle body (14).

15. A vehicle according to claim 14, characterized in that the pedals (30, 32) are arranged to pivot in the interior of the steering column (50) which is a component of the vehicle body (14) and each pedal has a tread surface which extends out of the steering column (50).

16. A vehicle according to claim 14, characterized in that the clutch and brake means comprise linkages (60,62) which are arranged in guide channels which are formed by and between the frame part (16) and the vehicle body (14) and are connected to the transaxle (54) and the brakes for the drivable runing wheels (18).

17. A vehicle according to claim 16, characterized in that the guide channels are formed by U-shaped slots which are moulded in the frame part (16) and the vehicle body (14) and abut one another:

18. A vehicle according to claim 16, characterized in that each of the linkages (60, 62) is rounded at the front end they are urged at this end into concave recesses (160) which are provided in the pedals (30, 32).

19. A vehicle according to claim 16, characterized in that the linkage (60) for the brake is operatively connected to an operating lever (64) which is arranged pivotally on the frame part (16) and can be swung into a position in which the linkage (60) for the brake is fixed in a position in which the brake is applied.

20. A vehicle according to claim 19, characterized in that the operating lever (64) has a first arm (200) which is so connected pivotally to the frame part (16) that it is adjustable in and transverse to the longitudinal direction of the vehicle.

21. A vehicle according to claim 20, characterized in that the operating lever (64) has a second arm (220) which is arranged for to and fro movement in a channel in the frame part (16).

22. A vehicle according to claim 13, characterized in that the vehicle body (14) has devices for reception of a gear shift lever, which is adjustable in the longitudinal direction of the vehicle and is connected to the transaxle (54).

23. A vehicle according to claim 13, characterized in that the vehicle body (14) can be cast in the final colour from plastics material.

24. A vehicle according to claim 13, characterized in that the frame part (16) is fitted with a rearwardly extending hitch device (36).

25. A vehicle according to claim 13, characterized in that the frame part (16) is a component of a vehicle (10) for lawn and garden care and receives a mower mechanism housing (22) adjustable in height by a lift device.

26. A vehicle according to claim 25, characterized in that the lift device comprises a height-adjusting device connected to the frame part (16) to pivot vertically and which is manually operable and can be fixed in various height positions and is connected to the mower mechanism housing (22) by two lift rods (240).

27. A vehicle according to claim 13, characterized in that the frame part (16) and the vehicle body (14) are provided with a receiving device for a driver's seat (24) adjustable in the longitudinal direction of the vehicle, the device comprising a first surface with a horizontal component, through which the weight of the driver and the seat (24) can be transferred to the frame part (16) and the vehicle body (14), and a second surface extending at the side, against which the seat (24) bears in order to prevent the seat (24) shifting outwardly under the weight of the driver.

28. A vehicle according to claim 27, characterized in that the vehicle body (14) is provided with two rows of detent positions (48) lying one behind the other, in which the seat (24) can engage selectively.

## Revendications

1. Véhicule comportant une partie de châssis inférieure (16) et une carrosserie de véhicule (14) reliée à celle-ci, caractérisé en ce que la partie de châssis (16) et la carrosserie de véhicule (14) sont respectivement faites en matière plastique renforcée de fibres et en matière plastique et possèdent des moyens moulés dans la masse permettant d'y fixer un moteur (34), une boîte de vitesses (54) à laquelle sont associées des roues motrices (18), et un support de roues non motrices (20) comportant des organes de direction disposés de façon à pouvoir pivoter autour d'un axe.

2. Véhicule selon la revendication 1, caractérisé en ce que le moteur (34) et la boîte de vitesses (54) constituent un module (52) qui possède une plaque de fixation (56) par l'intermédiaire de laquelle le moteur (34) et la boîte de vitesses (54) peuvent être fixés à la partie de châssis (16).

3. Véhicule selon la revendication 2, caractérisé en ce que les moyens de fixation servant à relier la plaque de fixation (56) à la partie de châssis (16) possèdent des écarteurs (des écrous 84) qui limitent la compression de la partie de châssis lors du serrage des moyens de fixation.

4. Véhicule selon la revendication 2, caractérisé en ce que la plaque de fixation (56) peut être fixée à la lisière de la partie de châssis (16) par l'intermédiaire d'un grand nombre de boulons (68) et de parties de plaque (82).

5. Véhicule selon la revendication 2, caractérisé en ce que le moteur (34) possède un arbre de transmission (92) comportant une poulie de commande et la plaque de fixation (56) possède une poulie de tension oscillante (178) qui est reliée à la poulie de commande par une courroie (90) et que l'on peut faire pivoter dans une position qui est plus éloignée de la poulie de commande et dans laquelle la courroie (90) est tendue.

6. Véhicule selon la revendication 1, caractérisé en ce que la partie de châssis (16) possède au moins un tronçon de canal (106) qui va vers le bas et dans lequel est logé un mécanisme de direction comportant deux roues de roulement (20).

7. Véhicule selon la revendication 6, caractérisé en ce que le tronçon de canal (106) sert de logement à une barre transversale (104) sur laquelle les organes de direction orientables sont placés.

8. Véhicule selon la revendication 7, caractérisé en ce que les organes de direction agissent sur un dispositif de direction à crémaillère qui est disposé sur la partie de châssis (16) et peut être actionné par l'intermédiaire d'un arbre de direction (114) qui, pour sa part, est placé dans une colonne de direction (50) tournée vers le haut et reliée à la partie de châssis (16).

9. Véhicule selon la revendication 8, caractérisé en ce que l'arbre de direction (114) est relié, à son extrémité inférieure, à un pignon (122) qui est en liaison active avec le dispositif de direction à crémaillère et, à son extrémité supérieure, à un volant de direction (28).

10. Véhicule selon la revendication 7, caractérisé en ce que la barre transversale (104) est fixée dans le tronçon de canal (106) au moyen d'un boulonnage.

11. Véhicule selon la revendication 7, caractérisé en ce qu'un carter de système de coupe (22) est suspendu au-dessous de la partie de châssis (16) par l'intermédiaire d'une paire avant et d'une paire arrière de tiges de levage (108, 226) dont les extrémités inférieures sont articule-es au carter du système de coupe (22), les extrémités supérieures de la paire de tiges de levage arrière (226) étant suspendues de façon articulée à la partie de châssis (16) et les extrémités supérieures de la paire de tiges de levage avant (108) étant suspendues de façon articulée à la barre transversale (104).

12. Véhicule selon la revendication 11, caractérisé en ce que les moyens de liaison entre la barre transversale (104) et la paire de tiges de levage avant (108) permettent une oscillation transversale limitée par rapport à la barre transversale (104).

13. Véhicule selon une ou plusieurs des revendications précédentes, caractérisée en ce que la partie de châssis (16) et la carrosserie de véhicule (14) sont réalisées de telle sorte qu'elles peuvent servir de logement à deux roues directrices (20), à des organes de direction des roues directrices (20) et à des organes d'embrayage et de freinage.

14. Véhicule selon la revendication 13, caractérisé en ce que les organes d'embrayage et de freinage possèdent une pédale d'embrayage et une pédale de frein (30, 32) qui sont disposées sur la carrosserie de véhicule (14) de façon à pouvoir tourner autour d'un axe.

15. Véhicule selon la revendication 14, caractérisé en ce que les pédales (30, 32) sont disposées de façon à pouvoir tourner autour d'un axe à l'intérieur de la colonne de direction (50) qui est partie intégrante de la carrosserie de véhicule (14) et présentent chacune une surface d'appui qui s'étend vers l'extérieur en sortant de la colonne de direction (50).

16. Véhicule selon la revendication 14, caractérisé en ce que les organes d'embrayage et de freinage possèdent des tringles (60, 62) qui sont disposées dans des canaux de guidage - qui sont formés par et entre la partie de châssis (16) et la carrosserie de véhicule (14) - et qui sont reliées à la boîte de vitesses (54) et à des freins de roues motrices (18).

17. Véhicule selon la revendication 16, caractérisé en ce que les canaux de guidage sont constitués de façon appropriée par des rainures en U moulées dans la masse sur la partie de châssis (16) et la carrosserie de véhicule (14) et situées les unes à côté des autres.

18. Véhicule selon la revendication 16, caractérisé en ce que chaque tringle (60, 62) est arrondie à son extrémité frontale et que ces extrémités appuient dans des courbures concaves (160) prévues dans les pédales (30, 32).

19. Véhicule selon la revendication 16, caractérisé en ce que la tringle du frein (60) est reliée opérationnellement à un levier de commande (64) qui est disposé sur la partie de châssis (16) de façon à pouvoir pivoter autour d'un axe et que l'on peut faire pivoter dans une position dans laquelle la tringle du frein (60) est bloquée dans une position dans laquelle le frein est serré.

20. Véhicule selon la revendication 19, caractérisé en ce que le levier de commande (64) possède une première branche (200) reliée à la partie de châssis (16) de façon à pouvoir pivoter, de telle manière qu'il est possible de la déplacer longitudinalement et transversalement par rapport au véhicule.

21. Véhicule selon la revendication 20, caractérisé en ce que le levier de manoeuvre (64) possède une deuxième branche (220) disposée dans un canal de la partie de châssis (16) afin d'effectuer un déplacement alternatif.

22. Véhicule selon la revendication 13, caractérisé en ce que la carrosserie de véhicule (14) possède des dispositifs de montage d'un levier de changement de vitesse que l'on peut déplacer dans la direction longitudinale du véhicule et qui est relié à la boîte de vitesses (54).

23. Véhicule selon la revendication 13, caractérisé en ce que la carrosserie de véhicule (14) peut être moulée en matière plastique directement dans le coloris définitif.

24. Véhicule selon la revendication 13, caractérisé en ce que la partie de châssis (16) est équipée d'un dispositif de remorquage (36) qui s'étend vers l'arrière.

25. Véhicule selon la revendication 13, caractérisé en ce que l'ensemble-châssis (16) est une pièce constitutive d'un véhicule d'entretien de pelouse et de jardin (10) et reçoit, par l'intermédiaire d'un dispositif de levage, un carter de système de coupe (22) dont on peut régler la hauteur.

26. Véhicule selon la revendication 25, caractérisé en ce que le dispositif de levage possède un dispositif de réglage de hauteur qui est relié à la partie de châssis (16) de manière à pouvoir se déplacer verticalement, qui peut être actionné à la main et être bloqué à différentes hauteurs et qui est relié au carter de système de coupe (22) par l'intermédiaire de deux tiges de levage (240).

27. Véhicule selon la revendication 13, caractérisé en ce que la partie de châssis (16) et la carrosserie de véhicule (14) sont pourvues d'un dispositif de montage destiné à un siège de conduite (24) réglable dans le sens longitudinal du véhicule, dispositif qui présente une première surface comportant une partie constitutive horizontale par l'intermédiaire de laquelle le poids du conducteur et du siège (24) peuvent être transmis à la partie de châssis (16) et à la carrosserie de véhicule (14), ainsi qu'une seconde surface latérale contre laquelle s'applique le siège (24) pour empêcher que le siège (24) ne se déplace vers l'extérieur sous le poids du conducteur.

28. Véhicule selon la revendication 27, caractérisé en ce que la carrosserie de véhicule (14) est pourvue de deux rangées de crans (48) placés les uns derrière les autres et dans lesquels on peut encliqueter le siège (24) au choix.
